# EUROPÄISCHE PATENTSCHRIFT

(11) **EP 3 290 183 B1**
(45) Veröffentlichungstag und Bekanntmachung des Hinweises auf die Patenterteilung: **09.12.2020**
(21) Anmeldenummer: 17188776.3
(22) Anmeldetag: 31.08.2017
(51) Int. Cl.: B29C 64/35, B29C 64/153, B22F 3/105, B08B 15/00, B33Y 10/00, B33Y 30/00, B33Y 50/02

(54) **VERFAHREN UND VORRICHTUNG ZUM GENERATIVEN HERSTELLEN EINES DREIDIMENSIONALEN OBJEKTS**
METHOD AND DEVICE FOR GENERATIVE PRODUCTION OF A THREE-DIMENSIONAL OBJECT
PROCÉDÉ ET DISPOSITIF DE FABRICATION ADDITIVE D'UN OBJET TRIDIMENSIONNEL

(30) Priorität: 02.09.2016 DE 102016216678
(43) Veröffentlichungstag der Anmeldung: 07.03.2018
(73) Patentinhaber: EOS GmbH Electro Optical Systems, 82152 Krailling (DE)
(72) Erfinder: MEHL, Sebastian, 82178 Puchheim (DE); MITTERMÜLLER, Maximilian, 80687 München (DE); SCHADE, Martin, 80809 München (DE); SCHILLING, Alexander, 87499 Wildpoldsried (DE)
(74) Vertreter: Prüfer & Partner mbB Patentanwälte · Rechtsanwälte

(56) Entgegenhaltungen:
- EP-A1- 2 862 651
- WO-A1-92/08592
- DE-A1-102004 031 881
- DE-C1- 19 649 865
- US-A1- 2009 025 638

## Beschreibung

Die vorliegende Erfindung bezieht sich auf ein Verfahren zum generativen Herstellen eines dreidimensionalen Objekts in einer Prozesskammer einer generativen Herstellvorrichtung durch schichtweises Aufbringen und selektives Verfestigen eines Aufbaumaterials innerhalb eines in der Prozesskammer angeordneten Baufelds. Dabei wird während der Herstellung des Objekts ein Prozessgasstrom der Prozesskammer zugeführt, der durch die Prozesskammer strömt und danach aus der Prozesskammer abgeführt wird. Die Erfindung richtet sich auch auf eine Vorrichtung, die zu einer vorzugsweise automatisierten Durchführung eines derartigen Verfahrens ausgebildet ist und/oder angesteuert wird, sowie auf eine Steuereinheit, die zur Generierung entsprechender Steuerbefehle ausgebildet ist. Insbesondere bezieht sich die vorliegende Erfindung auf Verfahren und Vorrichtungen, bei denen das Aufbaumaterial in Pulverform vorliegt.

Verfahren und Vorrichtungen zum generativen Herstellen dreidimensionaler Objekte sind auch unter dem Begriff "Additive Manufacturing" oder "generative Fertigung" bekannt. Typischerweise wird dabei ein Objekt innerhalb eines Baufelds Schicht für Schicht auf einer höhenverstellbaren Bauunterlage aufgebaut. Hierzu wird eine jeweilige Schicht eines Aufbaumaterials auf die Bauunterlage bzw. eine zuvor vorhandene Schicht aufgebracht und selektiv in einem Bereich verfestigt, der einem Querschnitt des herzustellenden Objekts entspricht. Diese Schritte finden in einer Prozesskammer der Herstellvorrichtung statt, die in einem Maschinengehäuse der Herstellvorrichtung angeordnet ist. Ein Beispiel eines solchen Verfahrens ist das "selektive Lasersintern oder Laserschmelzen", bei dem das selektive Verfestigen des Aufbaumaterials durch das Scannen der jeweiligen Schicht mit einem Laserstrahl bewirkt wird. Innerhalb der Prozesskammer bildet oft ein Herstellbehälter einen Begrenzungsrahmen für das Aufbaumaterial, indem er das Aufbaumaterial auf der höhenverstellbaren Bauunterlage seitlich begrenzt. Als Baufeld wird dabei in der Regel eine durch den oberen Rand des Herstellbehälters begrenzte Fläche verstanden. Die jeweils oberste Schicht des Aufbaumaterials kann in der Praxis oft auch über den Rand des so definierten Baufelds hinaus aufgebracht werden; das au-ßerhalb des Baufelds aufgebrachte Aufbaumaterial dient jedoch nicht der Objektherstellung und wird daher weder selektiv verfestigt noch anschließend mit der Bauunterlage zusammen abgesenkt.

Beim selektiven Verfestigen können je nach Art des verwendeten Aufbaumaterials, insbesondere beim Sintern oder Schmelzen von Kunststoff- oder Metallpulver, unerwünschte Verschmutzungen wie Spratzer, Rauche, Schmauche, Dämpfe und/oder Gase entstehen, die sich in die Prozesskammer hinein ausbreiten. Zusätzlich können bei Verwendung eines pulverförmigen Aufbaumaterials Verschmutzungen dadurch entstehen, dass Pulver oder Pulverstaub z. B. durch Unregelmäßigkeiten im Dosier- oder Beschichtungsprozess oder durch einen zu hohen lokalen Impuls eines Gasstroms auf eine Pulvermenge in der Prozesskammer aufgewirbelt werden. Verschmutzungen können den Fertigungsprozess negativ beeinflussen, beispielsweise indem sie den scannenden Laserstrahl absorbieren, streuen oder ablenken, sich auf einem Einkoppelfenster für den Laserstrahl niederschlagen oder sich auf einer Aufbaumaterialschicht ablagern, wodurch störende Einschlüsse bei der nachfolgenden Verfestigung entstehen oder das Aufbringen der nachfolgenden Schicht beeinträchtigt wird.

Um hohen Qualitäts- und Effizienzanforderungen an den Fertigungsprozess zu genügen, müssen solche Verschmutzungen daher möglichst schnell von der Prozessstelle, wo sie entstehen, abtransportiert werden. Dabei soll es insbesondere vermieden werden, dass die Verschmutzungen erneut und/oder an einer anderen Stelle in der Prozesskammer in einen Pfad der Verfestigungsstrahlung gelangen. Bei Mehr-Scanner-Systemen, in denen mehrere Verfestigungseinheiten wie Laser eingesetzt werden, besteht darüber hinaus die Gefahr, dass Verschmutzungen aus dem Bearbeitungsbereich eines Laserstrahls in den Pfad eines anderen Laserstrahls gelangen und dadurch dessen Prozess gestört wird. Außerdem erhöht sich mit der Anzahl der aktiven Laserstrahlen der Verschmutzungsahteil in der Prozesskammer, was wiederum einen verbesserten Abtransport der Verschmutzungen erforderlich macht.

In EP 2 862 651 A1 wird beispielsweise das Abtransportieren solcher Verschmutzungen bei einer Mehr-Scanner-Maschine mit vier Belichtungseinheiten beschrieben. Die Fläche eines Aufbaumaterialträgers, auf dem ein Objekt aufgebaut wird, ist hier in vier überlappende Quadranten unterteilt, die von jeweils einer Belichtungseinheit belichtet werden. Es wird vorgeschlagen, während der Objektherstellung der Prozesskammer ein sauberes Gas durch einen Gaseinlass zuzuführen, der nah über einem Zentralbereich des Aufbaumaterialträgers in einer Düse endet. Dabei ist die Düse nach unten zum Aufbaumaterialträger hin geschlossen und lässt das Gas nur seitlich durch Löcher eines ringförmigen Leitblechs herausströmen. Bei dieser Gaseinlasskonstruktion können allerdings Verschmutzungen über dem Zentralbereich des Aufbaumaterialträgers, d. h. unmittelbar unter der Düse, nicht effektiv abtransportiert werden.

WO 92/08592 offenbart eine Vorrichtung zum Herstellen von Bauteilen durch selektives Lasersintern, die ein Leitblech zum Richten eines Gases auf die Zielfläche aufweist. Die Temperatur des Gases ist insbesondere geregelt zum Kühlen einer Schicht von durch Wärme schmelzbarem Pulver, nachdem es selektiv mit einem Laser gesintert wurde, auf die Temperatur des Bauteils, das in vorangegangenen Schichten gebildet wurde. Spezifisch erfolgt das Kühlen vor dem nächsten Schichtauftrag. Das Leitblech richtet den Gasfluss zum Zentrum der Zielfläche und Auslassöffnungen sind an mehreren Seiten der Zielfläche vorgesehen, sodass der Gasstrom an der Zielfläche im Wesentlichen symmetrisch ist. Eine ringförmige Auslasshaube kann über der Zielfläche aufgehängt sein, um einen gleichmäßigen Gasstrom zu bewirken.

DE 196 49 865 C1 beschreibt ein Verfahren zur Herstellung eines Formkörpers durch schichtweises Aufbauen aus pulverförmigem Werkstoff, wobei die aufgebrachten Pulverschichten mittels eines Laserstrahls selektiv verfestigt werden. Gemäß einer Ausführungsform ist eine Düse zum Richten einer Schutzgasströmung auf die Auftreffstelle des Laserstrahls vorgesehen, wobei die Düse mit dem Laserstrahl mitbewegt wird.

Der Anmelderin sind ferner generative Herstellvorrichtungen bekannt, bei denen zum Abtransportieren von Verschmutzungen aus der Prozesskammer ein Gasstrom erzeugt wird, der mit einer kreisrunden oder einer länglichen, annähernd rechteckigen Auftrefffläche senkrecht auf eine obere Schicht des Aufbaumaterials zentral auftrifft und dadurch seitlich abgelenkt wird.

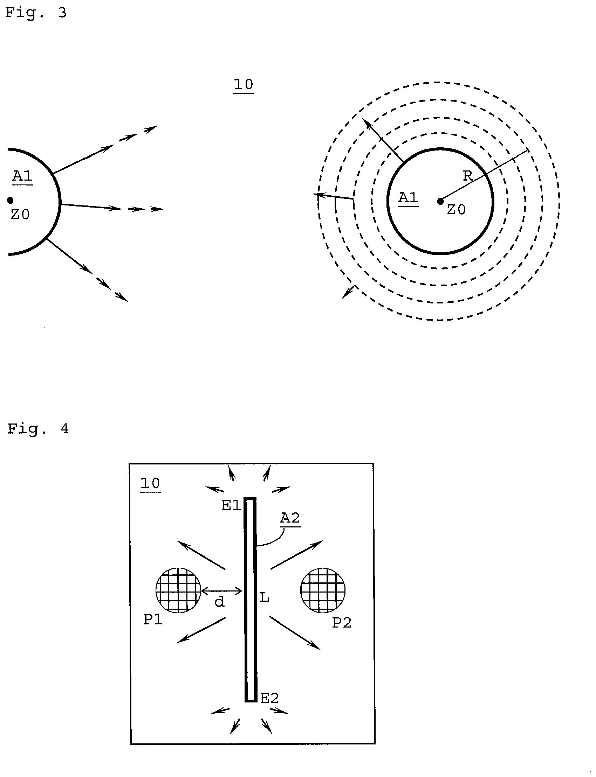

Auch bei solchen Gasstromgestaltungen ergeben sich in der Prozesskammer Problemzonen mit einem unzureichenden Abtransport von Verschmutzungen, wie in Fig. 3 und 4 veranschaulicht:
Eine kreisrunde Auftrefffläche A1 des Gasstroms im Baufeld 10 (Fig. 3) führt typischerweise dazu, dass bei der nach dem Auftreffen erfolgenden Ausbreitung (durch Pfeile angedeutet) des Gasvolumens entlang des Baufelds 10 die Geschwindigkeit (durch die jeweilige Pfeillänge angedeutet) des Gasstroms schnell mit wachsendem Abstand R vom Baufeldzentrum Z₀ sinkt und zwar aufgrund einer rasch (proportional zu R) wachsenden Fläche der mit Strichlinien markierten Ringe, in denen sich das Gasvolumen radial nach außen ausbreitet. Dieser Umstand ist links in der Figur nochmals verdeutlicht. Bei einer im Vergleich zur Baufeldgröße kleinen runden Auftrefffläche A1 reicht die rasch sinkende Geschwindigkeit (und Dichte) des Gasstroms daher nicht aus,
um Verschmutzungen wirksam über lange Distanzen bis zum Baufeldrand abzutransportieren. Wird eine Geschwindigkeit des in die Prozesskammer eingeblasenen Gasstroms derart erhöht, dass sich eine Abfuhr von Verschmutzungen über eine lange Distanz verbessert, kann es unmittelbar nach dem Auftreffen innerhalb des Baufelds zu hohen Geschwindigkeiten des Gasstroms kommen, die zu nachteiligen Verblasungen des Aufbaumaterials führen können.

Eine längliche, annähernd rechteckige oder aber streifenförmige Auftrefffläche A2 (Fig. 4) des Gasstroms innerhalb des Baufelds 10 bringt Problemzonen P1, P2 eines zu geringen oder uneinheitlich gerichteten Abtransports von Verschmutzungen mit sich, die sich jeweils mittig an Längsseiten L der Auftrefffläche in einem bestimmten Abstand d davon ausbilden. Der Grund hierfür liegt unter anderem in der starken Krümmung an beiden Enden E1, E2 des Streifens A2. Hier wächst die Fläche, in der sich ein Gasvolumen des auftreffenden Gasstroms nahezu nach allen Seiten hin verteilen kann (durch Pfeile angedeutet), etwa proportional zum Quadrat des Radius von der jeweiligen Auftreffstelle E1, E2 an. Dies führt zu deutlich niedrigeren Druckverhältnissen und Geschwindigkeiten im Bereich der Enden der Auftrefffläche A2 als an deren Längsseiten L, wo die auftreffenden Gasvolumenanteile unmittelbar nach dem Auftreffen nur in einer Richtung senkrecht zu der jeweiligen Längsseite von dieser weg abfließen können. Infolge des dort entsprechend höheren Drucks und höherer Geschwindigkeiten driften Gasvolumenanteile, die an den Längsseiten der Auftrefffläche A2 auftreffen, im weiteren Verlauf ihres Abfließens nicht nur in die Bereiche mit dem Umgebungsdruck, sondern auch in Richtung der beiden Enden E1, E2. Im Abstand d von der Auftrefffläche A2 bilden sich daher mittig zwei Zonen P1, P2 geringerer Geschwindigkeiten und divergierender Strömungsrichtungen aus. In diesen Problemzonen werden Verschmutzungen wiederum unzureichend abtransportiert.

In DE 198 53 947 C1 durchfließt ein Prozessgas eine flach ausgebildete Prozesskammer horizontal in einem von einer Bauebene und einem 20 cm höher verlaufenden Kammerdeckel gebildeten Kanal. Zusätzlich wird zum Schutz eines Laserstrahl-Einkoppelfensters vor Verschmutzungen vorgeschlagen, das Einkoppelfenster in einem extra hierfür erhöhten Bereich des Kammerdeckels anzuordnen. Ein zweiter Prozessgasstrom mit einer geringeren Dichte wird über direkt unter dem Einkoppelfenster angeordnete Einlassöffnungen in vertikalen Seitenwänden des erhöhten Bereichs ringförmig in die Prozesskammer -eingeleitet. Teilströme des zweiten Prozessgases sowie der erstere Gasstrom verlaufen bei diesem Aufbau teilweise unter 90° bis 180° gegeneinander. Dadurch können störende Gasturbulenzen oder -aufwinde in Zonen der Prozesskammer entstehen, welche nicht direkt durch die beiden Hauptströmungen beaufschlagt werden. In solchen Zonen ist der Abtransport von Verschmutzungen wiederum erschwert.

Die Aufgabe der vorliegenden Erfindung ist es daher, ein verbessertes Verfahren und eine verbesserte Vorrichtung der eingangs genannten Art bereitzustellen, mit denen die Wirksamkeit und Vollständigkeit des Abtransports störender, bei der selektiven Verfestigung des Aufbaumaterials entstehender Verschmutzungen aus der Prozesskammer deutlich erhöht werden kann. Insbesondere sollen dabei die aus dem Stand der Technik bekannten Problemzonen unzureichenden Abtransports von Verschmutzungen in der Prozesskammer verringert werden.

Diese Aufgabe wird gelöst durch ein Herstellungsverfahren nach Anspruch 1, eine Steuereinheit nach Anspruch 14 und eine Herstellvorrichtung nach Anspruch 15. Weiterbildungen der Erfindung sind in den abhängigen Ansprüchen angegeben. Dabei können die Herstellvorrichtung und die Steuereinheit durch die untenstehenden und in den Ansprüchen angegebnen Merkmale des Verfahrens weitergebildet sein und umgekehrt. Merkmale verschiedener vorteilhafter Weiterbildungen und Ausführungsformen können ferner untereinander kombiniert werden.

Ein erster Aspekt der Erfindung ist ein Verfahren zum generativen Herstellen eines dreidimensionalen Objekts in einer Prozesskammer einer generativen Herstellvorrichtung durch schichtweises Aufbringen und selektives Verfestigen eines Aufbaumaterials innerhalb eines in der Prozesskammer angeordneten Baufelds. Dabei wird während der Herstellung des Objekts ein Prozessgas mittels einer Gaszufuhreinrichtung der Prozesskammer zugeführt und über einen Auslass aus der Prozesskammer abgeführt. Die erfindungsgemäße Gaszufuhreinrichtung ist so ausgebildet und/oder relativ zum Baufeld angeordnet und/oder wird so angesteuert, dass ein durch die Prozesskammer strömender Gasstrom des Prozessgases derart geformt wird, dass eine im Wesentlichen längliche ovale Auftrefffläche des Gasstroms innerhalb des Baufelds erzeugt wird.

Sowohl der Begriff "Gasstrom" als auch das Erzeugen der erfindungsgemäßen Auftrefffläche innerhalb des Baufelds setzen voraus, dass das den Gasstrom bildende Prozessgas mit einer Geschwindigkeit in die Prozesskammer einströmt, bei der ein Einlassbereich der Gaszufuhreinrichtung eine erfindungsgemäße strahlformende Wirkung hinreichend entfalten kann und der Gasstrom auch tatsächlich in der jeweiligen Richtung bis hin zum Baufeld in einer kontrollierten Weise strömen kann, wenn er auf seinem Weg durch die Prozesskammer nach Verlassen der Gaszufuhreinrichtung nicht weiter abgelenkt wird. Die genannte Kontrolle bzw. Steuerung des Strömungsverhaltens des erfindungsgemäßen Gasstroms erfolgt dabei durch die oben zunächst allgemein und nachfolgend ausführlicher beschriebenen formgebenden Eigenschaften der erfindungsgemäßen Gaszufuhreinrichtung.

Als "Auftrefffläche" wird daher im Rahmen der Erfindung diejenige Fläche innerhalb des Baufelds verstanden, die vom Gasstrom erreicht wird oder werden würde, wenn er in der Prozesskammer nach Verlassen der Gaszufuhreinrichtung bis zum Baufeld ohne weitere Ablenkung in einer kontrollierten Weise strömt oder strömen würde. In Fällen ohne weitere Ablenkung des Gasstroms nach Verlassen der Gaszufuhreinrichtung entspricht die Auftrefffläche daher demjenigen Bereich der obersten Aufbaumaterialschicht, in dem der Gasstrom auf die Schicht trifft und von dieser seitlich abgelenkt wird. Dabei kann eine Größe der Auftrefffläche beispielsweise in Abhängigkeit eines vom Gasstrom innerhalb des Baufelds erzeugten Staudrucks ermittelt werden, wie weiter unten im Detail beschrieben wird.

Ein tatsächliches Auftreffen des Gasstroms auf dem Aufbaumaterial wird bei der Erfindung nicht zwingend vorausgesetzt. Vielmehr umfasst das erfindungsgemäße Verfahren auch Fälle, in denen der Gasstrom durch weitere Maßnahmen, beispielsweise eine Absaugung seitens des Auslasses, bereits vor Erreichen der obersten Aufbaumaterialschicht teilweise oder ganz seitlich abgelenkt wird. In solchen Fällen wird die erfindungsgemäße Auftrefffläche abstrakt gemäß der obigen Definition bestimmt, beispielsweise durch das Projizieren (im Allgemeinen keine Orthogonalprojektion) eines dreidimensional ausgebildeten, den Gasstrom formenden Einlassbereichs (nachfolgend kurz: Einlasses) der Gaszufuhreinrichtung auf das Baufeld. Zu möglichen Kriterien der erfindungsgemäßen Formung des Gasstroms und der daraus resultierenden Auftrefffläche zählen die Geometrie der prozesskammerseitigen Öffnungsfläche des Einlasses und ihre Orientierung relativ zum Baufeld, die Geometrie einer Innenwandung des Einlasses, beispielsweise relativ zu einem Leitungsquerschnitt des Prozessgas-Leitungssystems aufweitend oder aber verengend und daher bündelnd, insbesondere Abstand und Verhältnis eines Querschnitts der Prozessgas-Leitung und eines Querschnitts der prozesskammerseitigen Einlassöffnung, sowie ein Abstand des Einlasses zum Baufeld und eine Geschwindigkeit des Gasstroms.

Eine Größe der Auftrefffläche kann z. B. in Abhängigkeit eines Staudrucks ermittelt werden, den der Gasstrom innerhalb des Baufelds erzeugt. Unter "Staudruck" wird hier ein dynamischer Druck verstanden, den der Gasstrom durch ein Aufstauen der Strömung an einem festen Gegenstand, z. B. einer obersten Pulverschicht innerhalb des Baufelds, erzeugt. Ein Staudruck des Gasstroms an der Auftrefffläche ist dabei typischerweise im Betrieb höher als der Umgebungsdruck in der Prozesskammer. Setzt man einen Staudruckwert, der unmittelbar am Einlassbereich der Gaszufuhreinrichtung gemessen wird, mit 100% an, kann bei einer bestimmten Geschwindigkeit des Gasstroms ein Staudruckwert im Bereich der Auftrefffläche nur hoch 50% oder 30% des Ausgangswerts betragen, da sich ein Teilvolumen eines ungeführten Gasstroms auch in Bereiche mit Umgebungsdruck ausbreiten kann, die nicht in Fortsetzung seiner ursprünglichen Richtung liegen. Dieses Auffächern oder Ausfransen eines ungeführten Gasstroms über eine Distanz hinweg kann zumindest partiell zu einem Druck- und/oder Geschwindigkeitsverlust führen. Somit kann einerseits eine unterschiedliche Verteilung von Staudruckwerten über die Auftrefffläche hinweg entstehen und andererseits kann - bei Annahme eines bestimmten Staudruckwerts - eine Auftrefffläche jeweils unterschiedlich groß und jeweils unterschiedlich geformt sein.

Dass die Auftrefffläche "im Wesentlichen länglich oval" ist, bedeutet ganz allgemein, dass sie länglich und gerundet ist. Sie kann regelmäßig, z. B. elliptisch, oder aber unregelmäßig ausgebildet sein. "Im Wesentlichen" bedeutet hier und nachfolgend in Bezug auf die geometrische Form der Auftrefffläche, dass baulich - beispielsweise durch Konstruktion der Gaszufuhreinrichtung - bedingte geringfügige Abweichungen von einer bestimmten geometrischen Form mitumfasst sind. Insbesondere kann die erfindungsgemäße Auftrefffläche eine umhüllende Kontur mehrerer, dicht beieinander liegender und gegebenenfalls überlappender Teilflächen darstellen, d. h. erst die umhüllende Kontur hat die erfindungsgemäße längliche ovale Form. Dies kann beispielsweise bei mehreren dicht beieinander liegenden prozesskammerseitigen Einzelöffnungen der Gaszufuhreinrichtung der Fall sein.

Zudem kann es innerhalb der erfindungsgemäßen Auftrefffläche Bereiche unterschiedlich hohen Staudrucks und unterschiedlich hoher Auftreffgeschwindigkeiten geben, wobei - gegebenenfalls lokal und/oder zeitlich begrenzt - Werte eines Staudrucks und einer Auftreffgeschwindigkeit eines Teilstroms des Gasstroms auch bei 0 liegen können. Dies kann durch ein heterogenes Strahlprofil des Gasstroms bedingt sein, welches durch eine entsprechende Formung des Gasstroms durch die Gaszufuhreinrichtung und/oder infolge einer Ablenkung des Gasstroms auf seinem Weg durch die Prozesskammer zum Baufeld hin verursacht werden kann. Eine Ablenkung kann dabei z. B. durch bestimmte, den Gasstrom zumindest teilweise behindernde feste Elemente in der Prozesskammer, z. B. einen zum Aufbringen des Aufbaumaterials eingesetzten Beschichter, erzeugt werden oder durch einen oder mehrere weitere Gasströme, der/die z. B. in einem spitzen Winkel auf den erfindungsgemäßen Gasstrom auftrifft/auftreffen.

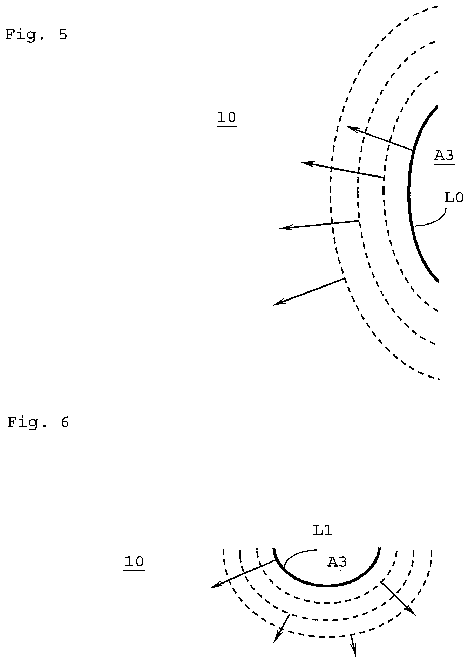

Der entscheidende Vorteil einer erfindungsgemäßen länglichen ovalen Auftrefffläche ist, dass damit die eingangs erwähnten, aus dem Stand der Technik bekannten Problemzonen unzureichenden Abtransports von Verschmutzungen über dem Baufeld erheblich verringert werden können:
Im Unterschied zu einer Auftrefffläche in Form eines Rechtecks oder eines geradlinigen Streifens A2 (Fig. 4) hat eine erfindungsgemäße längliche ovale Auftrefffläche A3 (Fig. 5 bis 7) eine durchgehend gekrümmte Kontur. Dadurch können große Unterschiede in der Druck- und Geschwindigkeitsverteilung der Gasstromanteile an den geraden Seiten einerseits und den spitzen Enden der Auftrefffläche andererseits reduziert werden: In der Mitte ihrer gekrümmten "Längsseiten" L0 führt eine längliche ovale Auftrefffläche A3 zu deutlich höheren Gasabflussgeschwindigkeiten als beim geraden Streifen/Rechteck A2 (die obigen zwei Problemzonen P1 und P2 eines zu geringen oder uneinheitlich gerichteten Abtransports von Verschmutzungen entstehen daher nicht) und bewirkt dadurch einen deutlich effektiveren Abtransport von Verschmutzungen in zentralen Bereichen des Baufelds B. Zugleich führen die gegenüber einem Streifen/Rechteck A2 weicheren, weniger stark gekrümmten "Schmalseiten"" L1 der länglichen ovalen Auftrefffläche A3 zu deutlich geringerem Druck- und Geschwindigkeitsabfall des Gasstroms in deren Nähe.

Im Unterschied zu einer Auftrefffläche in Form eines Kreises A1 (Fig. 3) besitzt eine erfindungsgemäße längliche ovale Auftrefffläche A3 (Fig. 5 bis 7) Bereiche unterschiedlicher Krümmung mit der folgenden vorteilhaften Wirkung:
Zunächst wird in Fig. 5 eine "Längsseite" L0 des länglichen Ovals A3 (Bereich geringerer Krümmung) betrachtet. Die Länge der hier konzentrischen Bogenlinien, die in einem bestimmten Abstand von einem äußeren Rand L0 der länglichen ovalen Auftrefffläche A3 verlaufen, wächst aufgrund der vergleichsweise geringen Krümmung deutlich weniger an als bei einer kreisrunden Auftrefffläche (vgl. Fig. 3). Dadurch verteilt sich (durch Pfeile angedeutet) ein innerhalb der Auftrefffläche A3 auftreffendes gegebenes Gasvolumen in diesem Bereich des Baufelds 10 in eine deutlich kleinere Fläche (in x/y-Richtung) als bei einer kreisförmigen Auftrefffläche. Ein auftreffender Gasstrom verliert daher mit wachsendem Abstand von der Auftrefffläche vergleichsweise wenig an Geschwindigkeit. Dies sorgt für einen wirksamen Abtransport von Verschmutzungen über relativ lange Distanzen.

Nun wird in Fig. 6 eine "Schmalseite" L1 des länglichen Ovals A3 betrachtet (Bereiche stärkerer Krümmung). Hier ist dem auftreffenden Gasvolumen durch die beinahe kreisförmige Krümmung des Randes L1 der Auftrefffläche A3 eine Ausbreitung erheblich erleichtert (ähnlich zu Fig. 3). Die Geschwindigkeit des Gasstroms verringert sich nach dem Auftreffen und der anschließenden Ausbreitung nach nahezu allen Richtungen entlang des Baufelds 10 in einem Ausmaß, das durch die rasche Flächenausdehnung mit wachsendem Abstand vom Auftreffpunkt bestimmt wird. Es kommt daher zu einem starken Geschwindigkeitsabfall in Bereichen L1 starker Krümmung der Auftrefffläche A3.

Während bei einer kreisförmigen Auftrefffläche A1 (Fig. 3) entlang des gesamten Rands der Auftrefffläche gleiche Bedingungen herrschen, weist die erfindungsgemäße längliche ovale Auftrefffläche A3 (Fig. 5-7) also Bereiche L0 mit geringerem und Bereiche L1 mit stärkerem Geschwindigkeitsabfall bei der weiteren Ausbreitung des in diesen Bereichen auftreffenden Gasstroms auf. Der stärkere Geschwindigkeitsabfall an den Schmalseiten L1 des Längsovals kann dadurch kompensiert werden, dass sie nahe an Rändern BR des Baufelds 10 angeordnet werden (Fig. 7), während die Längsseiten L0 vergleichsweise weit entfernt davon liegen können, da der Gasstrom dort durch seine beständig höhere Geschwindigkeit zum wirksamen Abtransport von Verschmutzungen über lange Distanzen in der Lage ist.

Die Gaszufuhreinrichtung kann beim erfindungsgemäßen Verfahren eine oder mehrere prozesskammerseitige Einlassöffnungen aufweisen. Sie kann grundsätzlich an einer beliebigen Stelle in der Prozesskammer und/oder an einer Prozesskammerwand angeordnet sein, die zur erfindungsgemäßen Formung des Gasstroms geeignet ist.

Die Gaszufuhreinrichtung kann ferner grundsätzlich mehrere Gasströme in der Prozesskammer erzeugen. Der erfindungsgemäß zu formende Gasstrom kann daher ein Teil des gesamten zugeführten Gasvolumens sein oder aber das gesamte zugeführte Gasvolumen umfassen.

Der erfindungsgemäße Gasstrom, der die längliche ovale Auftrefffläche innerhalb des Baufelds erzeugt, entspricht im Allgemeinen einer Hauptflussrichtung eines der Prozesskammer über die erfindungsgemäße Gaszufuhreinrichtung zugeführten Gasvolumens und umfasst mindestens 70%, vorzugsweise mindestens 80% und besonders bevorzugt mindestens 90% dieses über die Gaszufuhreinrichtung zugeführten Gasvolumens. Abhängig von der Art und dem Ort der Formung des erfindungsgemäßen Gasstroms kann es insbesondere weitere Gasteilström des so zugeführten Gasvolumens mit entsprechend geringeren Anteilen geben, die nicht direkt auf das Baufeld geführt werden und dort auftreffen, sondern in Nebenflussrichtungen durch die Prozesskammer fließen.

Die Erfindung ist auf keine spezielle Baufeldform beschränkt. Insbesondere kann das Baufeld einen regelmäßig oder aber unregelmäßig ausgebildeten Baufeldrand haben. Ein im Wesentlichen rechteckig ausgebildetes Baufeld kann allerdings - besonders in Kombination mit einer entlang einer Längsseite des Rechtecks ausgerichteten länglichen ovalen Auftrefffläche des Gasstroms und vorzugsweise einem passend ausgestalteten Auslass - unter anderem wegen der konstruktiven Einfachheit von Vorteil sein.

Hingegen kann die geometrische Anordnung und Ausgestaltung des Auslasses relativ zur erfindungsgemäßen Auftrefffläche den Abtransport von Verschmutzungen deutlich beeinflussen. Der Auslass kann beim erfindungsgemäßen Verfahren eine oder mehrere prozesskammerseitige Auslassöffnungen aufweisen und grundsätzlich an einer beliebigen Stelle innerhalb der Prozesskammer oder in einer Prozesskammerwand angeordnet sein. Vorteilhafte Ausgestaltungen und Anordnungen werden weiter unten angegeben.

Vorzugsweise ist beim erfindungsgemäßen Verfahren nach dem ersten Aspekt die längliche ovale Auftrefffläche im Wesentlichen achsensymmetrisch bezüglich einer ersten Symmetrieachse. Die erste Symmetrieachse kann beispielsweise mit einer durch einen Baufeldmittelpunkt gehenden Mittenachse des Baufelds, gegebenenfalls seiner Symmetrieachse, zusammenfallen. Zu den Vorteilen einer achsensymmetrischen Auftrefffläche zählt neben der Einfachheit der baulichen Realisierung auch eine entsprechend im Wesentlicher symmetrische Verteilung des nach dem Auftreffen entlang des Baufields fließenden Gasstroms. Besonders bevorzugt ist die Auftrefffläche zusätzlich im Wesentlichen achsensymmetrisch bezüglich einer zweiten Symmetrieachse, die senkrecht auf die erste Symmetrieachse steht. Beispielsweise kann die Auftrefffläche im Wesentlichen ellipsenförmig sein.

Der erfindungsgemäße Gasstrom kann innerhalb der Prozesskammer zumindest teilweise geführt werden, beispielsweise durch einen Schlauch, eine Leitung etc., mit einer durchgehenden Wandung oder mit Öffnungen. Vorzugsweise strömt jedoch zumindest ein Teil des Gasstroms über mindestens 60%, vorzugsweise mindestens 75%, besonders bevorzugt mindestens 90% einer ersten Prozesskammerhöhe ungeführt in einer kontrollierten Weise. Dabei ist die erste Prozesskammerhöhe ein Abstand zwischen dem Baufeld und einer Prozesskammerdecke, in der die Gaszufuhreinrichtung angeordnet ist, in einer zum Baufeld senkrechten Richtung.

"Ungeführt" bedeutet hierbei, dass der Gasstrom nicht in seiner Flussrichtung und/oder Ausdehnung bestimmt ist durch mindestens eine bauliche Einrichtung, die beispielsweise einen Hohlraum zur Durchleitung von Prozessgas aufweist und zumindest teilweise durch einen Rand begrenzt ist, also etwa ein Rohr, einen Schlauch, Kanal, eine Düse oder Ähnliches umfasst. Je weiter der Gasstrom zwischen der Prozesskammerdecke und dem Baufeld ungeführt in einer kontrollierten Weise strömt, desto größer ist der Höhenanteil der Prozesskammer, der durch den Gasstrom von Verschmutzungen befreit werden kann. Zudem kann ein umso größerer Teil der Prozesskammer für andere Zwecke, insbesondere für die Ausbreitung einer Verfestigungsstrahlung wie eines Laserstrahls genutzt werden.

Gemäß der Erfindung wird der Gasstrom mittels eines Einlasses der Gaszufuhreinrichtung geformt, der prozesskammerseitig eine längliche ovale Öffnungsfläche umfasst. Dadurch wird beim Gasstrom, der durch diese Öffnungsfläche in die Prozesskammer einströmt, in einfacher Weise eine längliche ovale Auftrefffläche innerhalb des Baufelds erzeugt. Vorzugsweise ist dabei die Öffnungsfläche des Einlasses im Wesentlichen achsensymmetrisch bezüglich einer dritten Symmetrieachse und besonders bevorzugt zusätzlich im Wesentlichen achsensymmetrisch bezüglich einer vierten Symmetrieachse, die senkrecht auf die dritte Symmetrieachse steht. Die Öffnungsfläche des Einlasses kann also beispielsweise elliptisch sein. Der Einlass kann insbesondere eine Düse darstellen.

Bei dieser Ausführungsform ist die dritte oder vierte Symmetrieachse entlang einer Längsausdehnung der Öffnungsfläche des Einlasses parallel zu einer Längsachse der länglichen ovalen Auftrefffläche des Gasstroms innerhalb des Baufelds. Vorzugsweise fällt diese dritte oder vierte Symmetrieachse in einer Orthogonalprojektion auf das Baufeld mit der ersten oder zweiten Symmetrieachse der Auftrefffläche des Gasstroms zusammen. Bei dieser Ausgestaltung ist also die Hauptausbreitungsrichtung des Gasstroms nach Verlassen des Einlasses senkrecht nach unten zum Baufeld hin gerichtet, sodass ein wesentlicher Teil des Gasstroms das Baufeld auf kürzester Strecke erreicht.

Ferner ist bei der obigen Ausführungsform die Öffnungsfläche des Einlasses vorzugsweise im Wesentlichen und besonders bevorzugt vollständig dem Baufeld zugewandt. Dadurch kann insbesondere gewährleistet werden, dass im Wesentlichen der gesamte Gasstrom das Baufeld erreicht, und zwar auf einer möglichst kurzen Strecke. Außerdem kann hierdurch besonders effektiv das Entstehen von Zonen im Bereich der Auftrefffläche reduziert werden, in welchen ein Gasvolumen steht oder sich Undefiniert oder walzen- bzw. wirbelförmig bewegt, wodurch ein möglichst schneller und weiträumiger Abtransport von Verschmutzungen über dem Baufeld nicht gewährleistet werden würde.

Alternativ oder zusätzlich ist dabei der Einlass in einer Prozesskammerdecke angeordnet und ragt vorzugsweise nicht oder nicht wesentlich in die Prozesskammer hinein. Nicht wesentlich heißt dabei, dass der Einlass aus der Prozesskammerdecke um nicht mehr als etwa 10 % der ersten Prozesskammerhöhe (des senkrechten Abstands zwischen der Prozesskammerdecke und dem Baufeld) nach unten in die Prozesskammer hineinragt. Bei einem nicht in die Prozesskammer hineinragenden Einlass kann es sich beispielsweise einfach um eine oder mehrere Öffnungen in der Prozesskammerdecke handeln. Ein nicht oder nicht wesentlich in die Prozesskammer hineinragender Einlass hat den Vorteil, keinen Pfad einer Verfestigungseinrichtung, beispielsweise eines Lasers, zu kreuzen.

Bei einer vorteilhaften Weiterentwicklung der obigen Ausführungsform wird der Gasstrom geformt, indem eine Innenquerschnittsfläche des Einlasses über seine Erstreckung in einer zum Baufeld senkrechten Richtung zum Baufeld hin nicht größer wird, sondern vorzugsweise im Wesentlichen konstant bleibt. Der Vorteil einer nicht wachsenden bzw. im Wesentlichen gleich bleibenden Innenquerschnittsfläche besteht in einer nicht sinkenden bzw. im Wesentlichen gleich bleibenden Strömungsgeschwindigkeit des Gasstroms auf seinem Weg durch den Einlass. Bei einer Verjüngung beträgt eine Innenquerschnittsfläche des Einlasses an seiner prozesskammerseitigen Öffnung vorzugsweise mindestens 80% einer Innenquerschnittsfläche einer am Einlass anschließenden Gaszufuhrleitung.

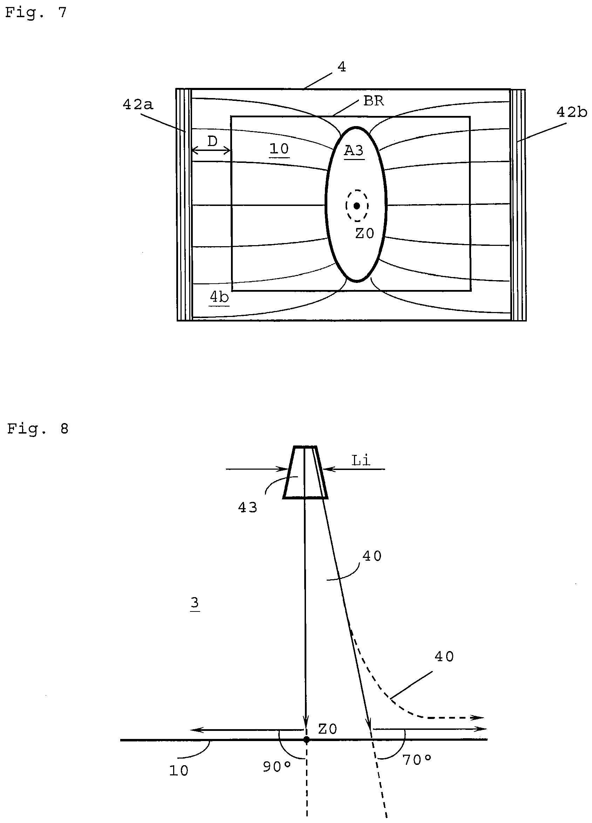

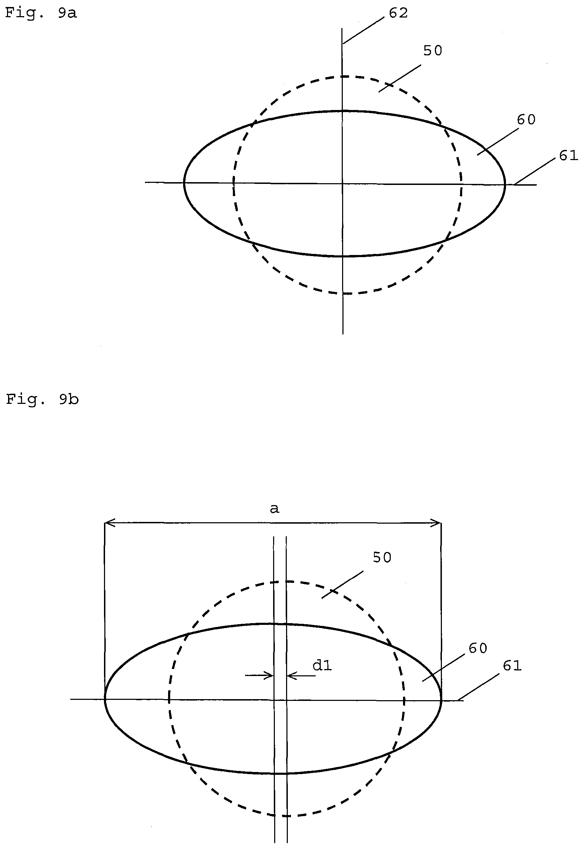

Da der Einlass bei der vorliegenden Ausführungsform prozesskammerseitig eine längliche ovale Öffnungsfläche besitzt, während eine Gaszufuhrleitung, die in den Einlass mündet, typischerweise einen anderen, oft kreisrunden, Querschnitt hat, wird der Gasstrom beim Passieren des Einlasses mit einem konstanten Innenquerschnitt gegenüber dem (kreisrunden) Querschnitt der Zufuhrleitung teilweise gebündelt, teilweise aufgefächert bzw. aufgeweitet. Mit anderen Worten haben hier Einlassinnenwände eine auffächernde Wirkung auf den Gasstrom in seiner Querschnittsabmessung parallel zur Längsachse der länglichen ovalen Öffnungsfläche des Einlasses (vgl. Fig. 8, 9a-9d).

Ein derart auffächernd wirkender Einlass hat einen wichtigen Vorteil, indem Teile des Gasstroms deutlich flachere Auftreffwinkel innerhalb des Baufelds besitzen, als etwa 90°. Dadurch wird zum einen ein am Aufbaumaterial anliegender Staudruck in diesen Bereichen der Auftrefffläche reduziert und zum anderen erleichtert eine erhöhte horizontale Geschwindigkeitskomponente dieser Teile des Gasstroms ihr gerichtetes Abfließen zum Baufeldrand hin nach der Umlenkung. Dies betrifft insbesondere die stark gekrümmten Endbereiche der länglichen ovalen Auftrefffläche, in deren Nähe der Gasstrom anschließend den stärksten Geschwindigkeitsverlust erfährt. Ein wichtiger Vorteil besteht ferner in einem gleichmäßigeren Geschwindigkeitsprofil des auftreffenden Gasstroms als bei einem Einlass ohne Auffächerung, beispielsweise bei senkrecht zum Baufeld verlaufenden Einlassinnenwänden. Mit einem gleichmäßigen Geschwindigkeitsprofil des Gasstroms beim und unmittelbar nach dem Auftreffen innerhalb des Baufelds wird einer Pulververblasung durch das Prozessgas wirksam vorgebeugt, was letztlich eine höhere Bauteilqualität ermöglicht.

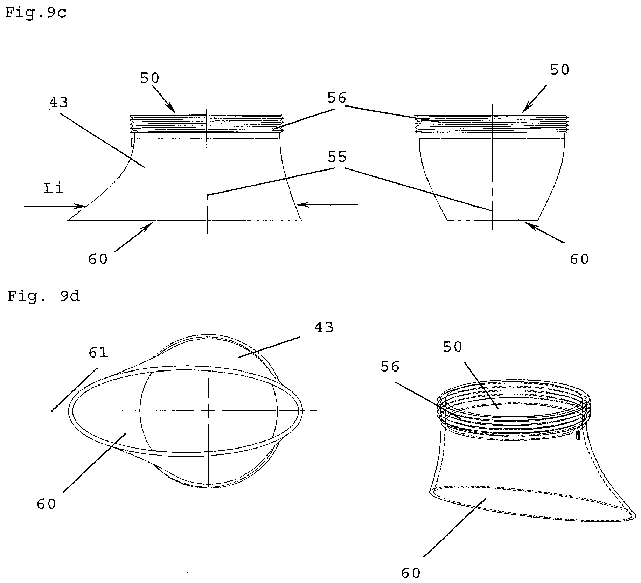

Bei dieser und anderen Ausführungsformen kann eine Strahlformung des Gasstroms durch eine geeignete Gestaltung einer prozesskammerseitigen Öffnung und/oder einer Innenwandung des Einlasses gleichmäßig oder ungleichmäßig erfolgen. Ein sich in einer zum Baufeld senkrechten Richtung verändernder Innenquerschnitt des Einlasses kann beispielsweise durch eine geeignete Richtung und Wölbung der Innenwandung des Einlasses zwischen dem Anschluss an eine Gaszufuhrleitung (der z. B. kreisrund sein kann) und einer prozesskammerseitigen Öffnung erreicht werden (vgl. Fig. 9c-9d). Diese Öffnung kann grundsätzlich einen beliebigen (in der obigen Ausführungsform jedoch länglichen ovalen) Querschnitt haben.

Dabei ist eine möglichst gleichmäßig oder steitig ausgebildete Wölbung, Kurvierung oder Steigung der Innenwandung des Einlasses deshalb von Vorteil, weil eine zu abrupte Richtungsänderung der Gasströmung innerhalb des Einlasses ihren Abriss bewirken könnte. Im Falle eines Strömungsabrisses würde die Gasströmung nicht mehr an der Innenwandung des Einlasses anliegen und daher nicht mehr von ihr definiert geführt werden können. Dies könnte zu undefinierten Prozessgaszonen und/oder Verwirbelungen des Prozessgases innerhalb der Prozesskammer führen, die vermieden werden sollten. Daher wird beim erfindungsgemäßen Verfahren vorzugsweise durch eine Abstimmung von Strömungsgeschwindigkeit und Einlassgeometrie eine möglichst gut definierte Führung des Gasstroms innerhalb des prozesskammerseitigen Einlassbereichs der Gaszufuhrleitung bewirkt.

Bei einer vorteilhaften Ausgestaltung nach der obigen Ausführungsform weist der Auslass mindestens eine, vorzugsweise zwei an gegenüberliegenden Seiten des Baufelds angeordnete, längliche Öffnung(en) auf, die sich im Wesentlichen parallel zu einer Längsachse der prozesskammerseitigen Öffnungsfläche des Einlasses erstreckt/erstrecken. Durch diese Anordnung wird die Strecke, die vom auftreffenden Gasstrom nach seiner Umlenkung entlang des Baufelds bis zum Auslass zurückgelegt werden soll, minimiert. Dies liegt daran, dass die Längsachse der prozesskammerseitigen Öffnungsfläche des Einlasses und die Längsachse der erfindungsgemäßen Auftrefffläche bei der vorliegenden Ausführungsform zueinander parallel sind. Sowohl die Kürze als auch eine sehr einfache, nahezu geradlinige Geometrie der Gasstromlinien zwischen Auftrefffläche und Auslass bei dieser Ausgestaltung (Fig. 7) tragen zu einem flächendeckenden effektiven Abtransport von Verschmutzungen über die Baufeldfläche hinweg bei.

Die mindestens eine längliche Auslassöffnung kann beispielsweise ein einzelner Schlitz sein oder aber mehrere übereinander angeordnete Schlitze umfassen. Diese Schlitze können gegebenenfalls mit senkrechten Abgrenzungen (Leitflächen) zur Ausbildung eines Rasters einer Vielzahl von Öffnungsflächen versehen sein, um das Prozessgas in einer gleichmäßigen Strömung durch den Auslass entweichen zu lassen oder anzusaugen und so einen punktförmigen oder konzentrierten Impuls auf das Prozessgasvolumen zu vermeiden. Der jeweilige Schlitz kann ferner sowohl durchgehend als auch in seiner Länge in separate Teilabschnitte unterteilt sein.

Eine Orientierung der Öffnungsfläche(n) des Auslasses ist dabei vorzugsweise im Wesentlichen senkrecht zur Baufeldebene. Besonders bevorzugt liegen zwei Öffnungsflächen einander direkt gegenüber an den gegenüberliegenden Baufeldseiten. Eine Länge des Auslasses oder mindestens einer seiner Öffnungen kann geringer sein als eine Seitenlänge des Baufelds oder dieser in etwa entsprechen. Vorzugsweise erstreckt sich jedoch mindestens eine Öffnung des Auslasses darüber hinaus, besonders bevorzugt an beiden Enden der zugehörigen Baufeldseite. Dadurch können insbesondere bei Ausgestaltungen mit einer vom Baufeldrand beabstandeten Prozesskammerwand unerwünschte Zonen, in denen sich Verschmutzungen stauen oder Wirbel bilden könnten, vermindert oder eliminiert werden. Der Auslass kann darüber hinaus auch weitere Öffnungen umfassen, beispielsweise an Baufeldseiten, an denen die bereits genannte(n) Öffnung(en) nicht liegt/liegen.

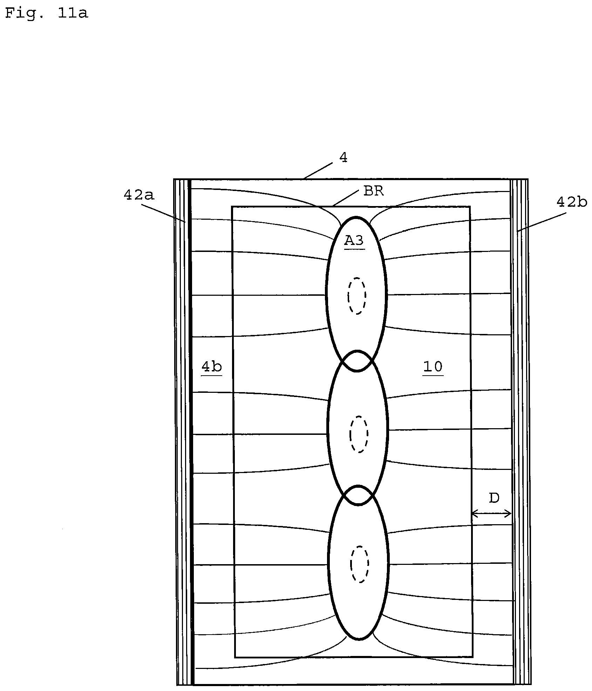

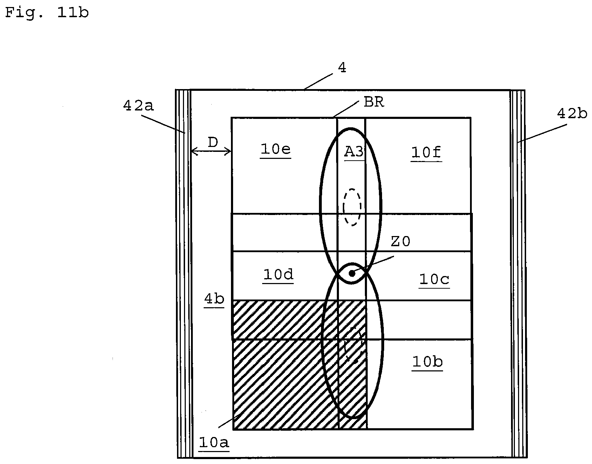

Es hat sich ferner herausgestellt, dass beim erfindungsgemäßen Verfahren eine Beabstandung einer Prozesskammerwandung und/oder des Auslasses von einem Baufeldrand oder einer Baufeldseite, gegebenenfalls in Kombination mit einer Erstreckung des Auslasses über eine Seitenlänge des Baufelds hinaus, vorteilhafterweise Zonen vermindert, in denen sich Verschmutzungen stauen oder in undefinierte Verwirbelungen übergehen können (vgl. Fig. 7 und 11). Der Abstand zwischen dem Baufeldrand und der Prozesskammerwand und/oder dem Auslass beträgt dabei vorzugsweise mindestens etwa 10 cm.

Vorzugsweise liegt beim erfindungsgemäßen Verfahren nach dem ersten Aspekt die längliche ovale Auftrefffläche innerhalb eines Zentralbereichs des Baufelds, der höchstens 60%, vorzugsweise höchstens 20%, besonders bevorzugt höchstens 10% einer Gesamtfläche des Baufelds einnimmt. Insbesondere der letztere, besonders bevorzugte Wert "höchstens 10%" ist durch eine oben beschriebene, im Allgemeinen nicht orthogonale Projektion der dreidimensionalen Innenwand-Geometrie des Einlasses der erfindungsgemäßen Gaszufuhreinrichtung auf das Baufeld ermittelbar.

Je geringer der Anteil dieses Zentralbereichs innerhalb des Baufelds, umso größer ist die restliche Baufeldfläche, über der der Gasstrom nach seiner Umlenkung beispielsweise parallel fließen kann und somit zu einem schnellen Abtransport von Verschmutzungen in Richtung des Baufeldrands beitragen kann. Eine zentrale Anordnung der Auftrefffläche innerhalb des Baufelds hat ferner den Vorteil, dass der Gasstrom nach dem Auftreffen in alle Richtungen entlang des Baufelds abfließen kann, sodass alle Bereiche des Baufelds grundsätzlich gleichermaßen durch den Gasstrom gereinigt werden können. Durch eine zentrale Anordnung der erfindungsgemäßen Auftrefffläche innerhalb des Baufelds werden zudem im Unterschied zu einer dezentralen Anordnung lange Strecken jeweiliger Gasstromanteile bis zum Baufeldrand vermieden. So kann selbst bei Mehr-Scanner-Maschinen mit mehreren Verfestigungseinheiten und entsprechend großer Baufeldfläche bereits ein einziger Einlass der Gaszufuhreinrichtung, der einen einzigen Zentralgasstrom erzeugt, einen ausreichend wirksamen und schnellen Abtransport von Verschmutzungen aus der Prozesskammer gewährleisten.

Eine solche verhältnismäßig kleine Auftrefffläche eines zentralen Gasstroms nach dem ersten Aspekt der Erfindung kann zudem einen vorteilhaften Synergieeffekt in Kombination mit einem Deckengasstrom gemäß dem weiter unten dargestellten zweiten Aspekt der Offenbarung entfalten, der der Prozesskammer durch zusätzliche mehrere Deckeneinlässe in einer zum Baufeld im Wesentlichen senkrechten Richtung zugeführt wird. Die Synergie ergibt sich erstens dadurch, dass der zentrale Gasstrom und der Deckengasstrom im Wesentlichen gleich gerichtet sind, nämlich im Wesentlichen senkrecht zum Baufeld hin, was zu einer gegenseitigen Verstärkung der erfindungsgemäßen Reinigungswirkung führt, weil ein unerwünschtes Aufeinandertreffen verschiedener Prozessgasströme im Vergleich zum Stand der Technik effektiv vermieden werden kann. Zweitens können bei einer Kombination eines zentralen Gasstroms mit einem Deckengasstrom die jeweiligen Vorteile besonders stark zur Geltung kommen: Während der zentrale Gasstrom bei einer möglichst kleinen Auftrefffläche innerhalb des Baufelds einen besonders effektiven Abtransport von Verschmutzungen entlang des Baufelds gewährleistet, können Verschmutzungen in weiter oben gelegenen Prozesskammervolumina, die nicht direkt von einem solchen zentralen Gasstrom durchströmt werden, effektiv vom Deckengasstrom in Richtung des Baufelds abtransportiert, dort gegebenenfalls vom über das Baufeld hinweg zu einem Baufeldrand abfließenden zentralen Gasstrom erfasst und mitgeführt und damit aus einem Bereich über dem Baufeld entfernt werden.

Das Größenverhältnis des oben genannten Zentralbereichs und der Gesamtfläche des Baufelds kann von einer Veränderung des Staudrucks über die Distanz zwischen einem zentralen Gaseinlass in die Prozesskammer und dem Baufeld abhängen. Beispielsweise kann die Auftrefffläche bei einem Wert von mindestens 10% des Staudrucks, der unmittelbar am Ausgang des Einlasses anliegt, durch welchen der Gasstrom die Gaszufuhreinrichtung in Richtung zum Baufeld hin verlässt, etwa 5% des Baufeldes einnehmen. Bei einem Staudruckwert von mindestens 5% des genannten Ausgangswerts am Ausgang des Einlasses kann der Zentralbereich etwa 20% des Baufeldes einnehmen.

Bei einer weiteren vorteilhaften Ausführungsform der Erfindung nach dem ersten Aspekt ist die Gaszufuhreinrichtung so ausgebildet und/oder relativ zum Baufeld angeordnet und/oder wird so angesteuert, dass der Gasstrom derart geformt wird, dass mehrere längliche ovale Auftreffflächen von Teilströmen des Gasstroms innerhalb des Baufelds erzeugt werden. In Bezug auf mindestens eine und vorzugsweise alle von diesen mehreren länglichen ovalen Auftreffflächen gilt die gesamte vorstehende und auch nachfolgende Darstellung der Erfindung, in der von einer einzelnen länglichen ovalen Auftrefffläche des Gasstroms die Rede ist, sinngemäß.

Bei dieser Ausführungsform sind die mehreren länglichen ovalen Auftreffflächen der Teilströme in ihrer Längsausdehnung im Wesentlichen gleich orientiert und teilen vorzugsweise eine Symmetrieachse, bezüglich welcher jede der mehreren Auftreffflächen achsensymmetrisch ist. Besonders bevorzugt stimmt dabei die gemeinsame Symmetrieachse der Auftreffflächen mit einer Symmetrieachse des Baufelds überein.

Die dargelegte Ausführungsform ermöglicht eine vorteilhafte Skalierung des Fertigungskonzepts mit wenigen Variablen. Beispielsweise erlaubt eine Aneinanderreihung von länglichen ovalen Auftreffflächen, insbesondere mit teilweiser Überlappung, eine Verlängerung des Baufelds in Richtung der gemeinsamen Längsorientierung (gegebenenfalls einer gemeinsamen Symmetrieachse) der Auftreffflächen. Ohne die einzelnen Auftreffflächen zu vergrößern (d. h. unter Beibehaltung im Wesentlichen aller Optimierungen und Vorteile einer einzelnen länglichen ovalen Auftrefffläche für den Abtransport von Verunreinigungen) erlaubt diese Ausführungsform eine Erhöhung des Bauvolumens und/oder der Bauraten in einer Prozesskammer um ein Vielfaches. Insbesondere ist dabei eine Integration weiterer Verfestigungseinheiten (z. B. Laser- und/oder Scannereinheiten) zur Erhöhung der Bauraten des Systems möglich, beispielsweise können pro jede weitere Auftrefffläche eine oder zwei zusätzliche Verfestigungseinheiten hinzukommen.

Vorzugsweise trifft beim erfindungsgemäßen Verfahren nach dem ersten Aspekt der Gasstrom innerhalb eines oben genannten Zentralbereichs des Baufelds im Wesentlichen rechtwinklig zum Baufeld, insbesondere unter mindestens 45°, bevorzugt unter mindestens 60°, besonders bevorzugt unter mindestens 70°, auf. "Im Wesentlichen" bedeutet dabei erstens, dass der ungeführte Gasstrom wabern kann bzw. im Betrieb der generativen Herstellvorrichtung zumindest zeitweise keine permanente Gestalt aufweisen kann. Zweitens trifft ein zentraler, innerer Teilstrom des erfindungsgemäßen Gasstroms üblicherweise in einem Winkel von 85° bis 90° auf das Baufeld auf. D. h., die genannten flacheren Winkel gelten in der Regel für die Randbereiche des Gasstroms, die etwa durch eine Einlassdüse geführt und/oder geformt worden sind. Das im Wesentlichen rechtwinklige Auftreffen des Gasstroms innerhalb eines Zentralbereichs des Baufelds hat einen Vorteil, dass der Gasstrom anschließend unter im Wesentlichen gleichen Bedingungen nach verschiedenen Seiten in Richtung zum Baufeldrand hin abgelenkt werden kann. Dadurch kann ein möglichst gleichmäßiger Abtransport von Verschmutzungen entlang des gesamten Baufelds erzielt werden.

Mit einem Profil des Gasstroms, das in Randbereichen eine Auffächerung aufweist, indem außenliegende Teilströme des Gasstroms zunehmend flacher auf das Baufeld auftreffen, kann insgesamt eine erhebliche Vergleichmäßigung der Geschwindigkeiten erzielt werden, mit welchen die einzelnen Anteile des Gasstroms innerhalb des Baufelds auftreffen und anschließend über das Baufeld hinweg weiterfließen. Im Vergleich mit einem rechtwinklig auftreffenden Gasstromstrahl erzeugt ein mit gleicher Geschwindigkeit spitzwinklig auftreffender Gasstromstrahl typischerweise einen geringeren Staudruck am Auftreffpunkt. So kann für eine möglichst wirksame Entfernung von Verschmutzungen aus der Prozesskammeratmosphäre ein hoher Volumenstrom bzw. eine hohe Geschwindigkeit des Gasstroms eingestellt werden, welche dennoch nicht mit lokalen Geschwindigkeitsüberhöhungen in Baufeldnähe einhergehen, die zu einem unerwünschten Aufwirbeln von Pulver aus einem Pulverbett der oberen Aufbaumaterialschicht und damit zu einer Verminderung der Qualität eines Bauprozesses und Bauteils führen könnten.

Bevorzugt fließt beim erfindungsgemäßen Verfahren nach dem ersten Aspekt der Gasstrom nach dem Auftreffen innerhalb des Baufelds im Wesentlichen parallel zum Baufeld zu einem Rand des Baufelds hin. Dabei findet eine Umlenkung des innerhalb des Baufelds auftreffenden Gasstroms in eine im Wesentlichen parallele Flussrichtung zum Rand des Baufels hin in einem unteren Viertel, vorzugsweise einem unteren Sechstel, besonders bevorzugt einem unteren Achtel einer zweiten Prozesskammerhöhe statt, die einem Abstand zwischen dem Baufeld und der Gaszufuhreinrichtung in einer zum Baufeld senkrechten Richtung entspricht. Insbesondere kann die oberste Aufbaumaterialschicht als eine Prallfläche für den Gasstrom fungieren, die den Gasstrom beispielsweise bei etwa senkrechtem Auftreffen auf ihr um etwa 90° umlenkt.

"Im Wesentlichen parallel" kann hier bedeuten, dass nicht zwingend das gesamte Volumen des Gasstroms in gleicher Weise umgelenkt wird. Geringfügige Abweichungen von einer anschließenden parallelen Flussrichtung relativ zum Baufeld kann es insbesondere in der Mitte des auftreffenden Gasstroms geben. Bevorzugt werden mindestens 50%, vorzugsweise 65%, besonders bevorzugt 80% des Gasstromvolumens in eine gerichtete Strömung im Wesentlichen parallel zum Baufeld umgelenkt.

Der der zweiten Prozesskammerhöhe entsprechende Abstand ist der senkrechte Abstand zwischen demjenigen Bereich eines prozesskammerseitigen Einlassbereichs der Gaszufuhreinrichtung, der dem Baufeld am nächsten liegt, und dem Baufeld. Umfasst beispielsweise dieser Einlassbereich einen aus der Prozesskammerdecke zum Baufeld hin hervorragenden Einlass wie eine Düse, ein Rohr oder einen Rüssel, so wird der genannte Abstand von demjenigen Bereich der Düse, des Rohrs oder Rüssels aus gemessen, der dem Baufeld am nächsten liegt. Je näher am Baufeld die Umlenkung des Gasstroms zur im Wesentlichen parallelen Flussrichtung erfolgt, desto intensiver ist der Abtransport von Verschmutzungen unmittelbar oberhalb des Baufelds, wo die meisten eingangs genannten Verschmutzungen entstehen.

Vorzugsweise ist beim erfindungsgemäßen Verfahren nach dem ersten Aspekt der Auslass in einem unteren Viertel, bevorzugt einem unteren Fünftel, besonders bevorzugt einem unteren Sechstel der obigen zweiten Prozesskammerhöhe angeordnet. Je näher am Baufeld der Auslass in vertikaler Richtung angeordnet ist, desto kürzere Strecken müssen von über dem Baufeld strömenden Gasstromanteilen bis zum Verlassen der Prozesskammer zurückgelegt werden. Dadurch werden Verschmutzungen auf kürzestem Wege aus der Prozesskammer entfernt, was die Gefahr einer Prozessstörung durch Verschmutzungen reduziert.

Ferner kann der Auslass eine Absaugeinrichtung zum Absaugen des Prozessgases aus der Prozesskammer umfassen. Eine solche Absaugeinrichtung kann an einer beliebigen Stelle im Prozessgasleitungssystem angeordnet sein. Sie kann beispielsweise eine Turbine oder eine Art Propeller umfassen, die für eine Umwälzung des Prozessgases in einem Gaskreislauf sorgen, in dem das Prozessgas zunächst in einer kontrollierten Weise durch die Prozesskammer strömt und danach vom Auslass zurück zur erfindungsgemäßen Gaszufuhreinrichtung befördert wird, wobei geeignete Filter auf dem Weg durch das Leitungssystem das Prozessgas von Verschmutzungen reinigen können.

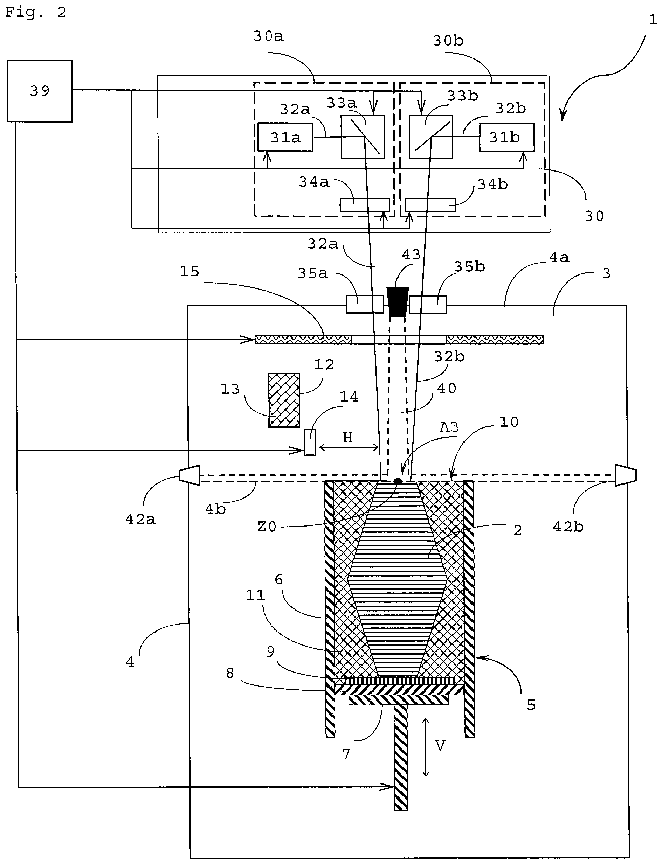

Vorzugsweise wird beim erfindungsgemäßen Verfahren nach dem ersten Aspekt das selektive Verfestigen mittels einer Verfestigungseinrichtung durchgeführt, die mindestens zwei Verfestigungseinheiten umfasst. Dabei ist jeder Verfestigungseinheit ein Bearbeitungsbereich innerhalb des Baufelds zugeordnet, wobei die Bearbeitungsbereiche bevorzugt symmetrisch bezüglich einer zum Baufeld senkrechten Mittenebene oder Mittenachse, die durch einen Mittelpunkt des Baufelds geht, angeordnet sind (vgl. Fig. 2, 10a/10b und 11b). Diese Ausgestaltung kann insbesondere vorteilhaft mit der obigen Ausführungsform mit mehreren länglichen ovalen Auftreffflächen von Teilströmen des Gasstroms innerhalb des Baufelds kombiniert werden.

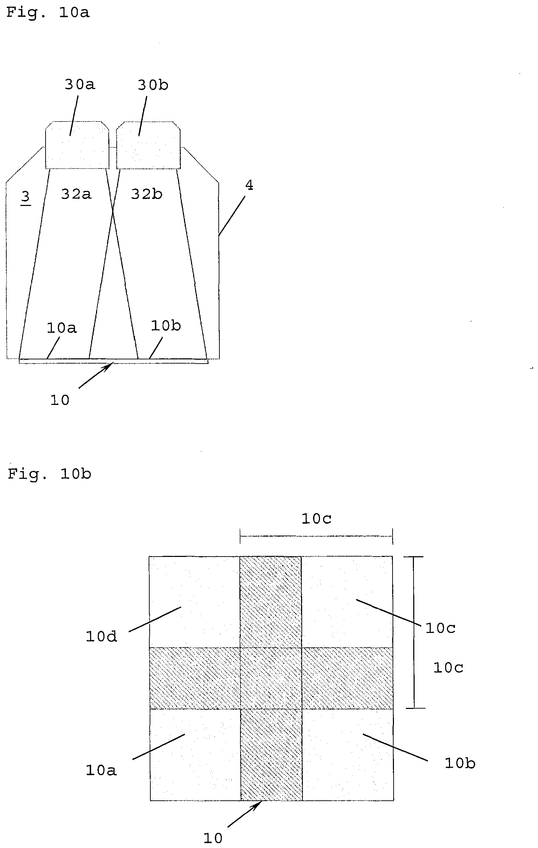

In vielen Fällen reicht hier jedoch bereits eine einzelne erfindungsgemäße Auftrefffläche für einen verbesserten Abtransport von Verschmutzungen aus der Prozesskammer aus. Beispielsweise kann bei bis zu vier Verfestigungseinheiten, deren zugehörige Bearbeitungsbereiche um einen Punkt des Baufelds herum liegen, eine einzige erfindungsgemäße Auftrefffläche erzeugt werden, die denselben Punkt als ihren Mittelpunkt hat. Mit anderen Worten ist in diesem Beispiel der Mittelpunkt der Auftrefffläche mittig zwischen den einzelnen Bearbeitungsbereichen oder gegebenenfalls mittig im Überlappungsbereich der einzelnen Bearbeitungsbereiche angeordnet (vgl. Fig. 10b und 11b sinngemäß). Da der erfindungsgemäße Gasstrom nach dem Auftreffen innerhalb des Baufelds nach allen Seiten von der Auftrefffläche weg abgelenkt wird, durchströmt bei dieser Anordnung das über dem Baufeld zum Baufeldrand abfließende Prozessgas jeweils nur einen Bearbeitungsbereich. Folglich trägt der Gasstrom Verschmutzungen von einem Bearbeitungsbereich direkt zum Baufeldrand und nicht zu einem anderen Bearbeitungsbereich, sodass eine Vervielfachung der Anzahl der Verfestigungseinheiten nicht zu einem Anstieg von Verschmutzungsmengen über einem Bearbeitungsbereich führt. Dieses Prinzip einer mittigen Anordnung von Auftreffflächen bezüglich der Bearbeitungsbereiche lässt sich sinngemäß auch auf Fälle mit mehreren Auftreffflächen übertragen.

Das Vorsehen mehrerer Verfestigungseinheiten ermöglicht beispielsweise eine Vergrößerung eines möglichen Bauvolumens und/oder eine Erhöhung möglicher Bauraten um ein Vielfaches. Eine Verfestigungseinheit kann dabei insbesondere eine Laser-Scanner-Einheit oder ein Scanner oder ein Zeilenbelichter sein.

Bearbeitungsbereiche können identische Bereiche innerhalb des Baufelds sein, einander überlappen oder überlappungsfrei nebeneinander liegen. Vorzugsweise decken die Bearbeitungsbereiche zusammen im Wesentlichen die gesamte Baufeldfläche ab, sodass das gesamte Baufeld für die Fertigung genutzt werden kann. Insbesondere können die Bearbeitungsbereiche innerhalb des Baufelds achsensymmetrisch zueinander liegen. Sie können beispielsweise vierfach rotationssymmetrisch bezüglich einer Symmetrieachse durch den Mittelpunkt des Baufelds sein, die senkrecht zum Baufeld steht.

Bevorzugt umfasst beim erfindungsgemäßen Verfahren nach dem ersten Aspekt die Gaszufuhreinrichtung mindestens eine Befestigungseinrichtung zum lösbaren Befestigen mindestens einer Düse zur Formung des Gasstroms. Dabei wird im Voraus die mindestens eine Düse aus einer größeren Menge mittels der Befestigungseinrichtung befestigbarer Düsen ausgewählt und mittels der Befestigungsvorrichtung befestigt, wobei durch das Auswählen der mindestens einen Düse eine Strömungsrichtung und/oder ein Strömungsprofil des Gasstroms in der Prozesskammer geändert wird. Diese Änderung der Strömungsrichtung kann den erfindungsgemäßen Gasstrom als Ganzes betreffen, was eine laterale Verschiebung seiner Auftrefffläche innerhalb des Baufelds bewirkt. Alternativ oder zusätzlich kann die Änderung einen Teilstrom des erfindungsgemäßen Gasstroms betreffen, was zu einer Änderung der geometrischen Form und/oder der Größe der erfindungsgemäßen Auftrefffläche führt.

Alternativ oder zusätzlich umfasst die Gaszufuhreinrichtung vorzugsweise mindestens eine schaltbare Düse zur Formung des Gasstroms, die zwischen einem funktionslosen Zustand und einer Funktion zum Einblasen des Prozessgases schaltbar ist und/oder zwischen mindestens zwei vordefinierten Ausbildungen bzw. Zuständen einer dreidimensionalen Einlassgeometrie der Düse und/oder eines Öffnungsquerschnitts und/oder einer Orientierung einer Düsenöffnung relativ zu Baufeld und/oder Prozesskammerwandung schaltbar ist, wobei eine geeignete Kombination mindestens zweier der folgenden Parameter ausgewählt und eingestellt wird: (i) Einströmgeschwindigkeit des Gasstroms in die Prozesskammer, (ii) dreidimensionale Einlassgeometrie der Düse, (iii) Öffnungsquerschnitt einer Düsenöffnung sowie (iv) Orientierung einer Düsenöffnung relativ zu Baufeld und/oder Prozesskammerwandung.

Die gerade beschriebenen erfindungsgemäßen Verfahren zur Ausgestaltung der Gaszufuhreinrichtung werden einzeln oder in Kombination miteinander vorzugsweise in Abhängigkeit mindestens eines der folgenden Kriterien besonders bevorzugt automatisiert durchgeführt: (i) eine Geometrie und/oder Größe und/oder Anordnung mindestens eines zu verfestigenden Bereichs in einer obersten Aufbaumaterialschicht innerhalb des Baufelds, (ii) eine Position eines Beschichters innerhalb der Prozesskammer, (iii) eine Position einer bewegbaren Gaszufuhreinheit und/oder einer bewegbaren Gasabfuhreinheit innerhalb der Prozesskammer, (iv) eine Position einer bewegbaren Leitfläche zum Leiten von Prozessgas in mindestens eine vordefinierte Richtung innerhalb der Prozesskammer, (v) ausgewählte Eigenschaften eines im Bauprozess verwendeten Aufbaumaterials, z. B. eine Größe und/oder ein Gewicht von Pulverpartikeln sowie (vi) ein Signal einer Überwachungseinrichtung zur Überwachung des Bauprozesses, das z. B. ein Fehlersignal sein kann. Ein Vorteil dieser bevorzugten Ausgestaltungen des erfindungsgemäßen Verfahrens liegt darin, dass der Gasstrom z. B. im Rahmen eines Regelsystems sehr flexibel an wechselnde Bedingungen des Gasflusses über dem Baufeld und potenziell in der gesamten Prozesskammer angepasst werden kann, wodurch Störungen des Bauprozesses durch Verschmutzungen weiter vermindert werden können und eine dauerhaft hohe Bauteilqualität gewährleistet werden kann.

Ein zweiter Aspekt der Offenbarung ist ein Verfahren zum Erzeugen eines Deckengasstroms beim generativen Herstellen eines dreidimensionalen Objekts in einer Prozesskammer durch schichtweises Aufbringen und selektives Verfestigen eines Aufbaumaterials innerhalb eines in der Prozesskammer angeordneten Baufelds. Dabei weist die Prozesskammer eine Kammerwandung mit einer oberhalb des Baufelds liegenden Prozesskammerdecke auf. Gemäß dem zweiten Aspekt wird zumindest zeitweise vor und/oder während und/oder nach der Herstellung des Objekts ein Deckengasstrom eines Prozessgases durch die Prozesskammer geleitet, der von der Prozesskammerdecke in Richtung zum Baufeld hin in einer kontrollierten Weise strömt. Der Deckengasstrom wird der Prozesskammer durch mehrere in der Prozesskammerdecke ausgebildete Deckeneinlässe zugeführt, die über einen Bereich der Prozesskammerdecke verteilt sind und die so ausgebildet und/oder angeordnet sind und/oder angesteuert werden, dass der Deckengasstrom beim Austritt aus den Deckeneinlässen im Wesentlichen senkrecht zum Baufeld nach unten auf das Baufeld gerichtet ist.

Die genannte Kontrolle bzw. Steuerung des Strömungsverhaltens des Deckengasstroms erfolgt dabei durch die oben zunächst allgemein und nachfolgend ausführlicher beschriebenen Eigenschaften der Deckeneinlässe.

Der Bereich der Prozesskammerdecke, über den die Deckeneinlässe verteilt sind, kann in Bezug auf seine Ausdehnung oder Fläche ein Teilbereich der Prozesskammerdecke sein oder aber sich über die gesamte Prozesskammerdecke hinweg erstrecken. "Im Wesentlichen senkrecht" umfasst insbesondere Winkelbereiche von mindestens 45°, vorzugsweise mindestens 70°, besonders bevorzugt mindestens 80° bezüglich des Baufelds.

Durch die in der Prozesskammerdecke verteilten mehreren Deckeneinlässe nach dem zweiten Aspekt der Offenbarung werden mehrere im Wesentlichen senkrecht nach unten zum Baufeld fließende Deckenteilströme erzeugt, die in der Prozesskammeratmosphäre vorhandene Verschmutzungen sofort nach unten zum Baufeld hin drücken. So kann insgesamt eine nahezu flächige vertikale Prozessgasströmung, eine Art "herabsinkender Prozessgasteppich", mit beliebig hoher Homogenität erzeugt werden.

Durch den Deckengasstrom kann es daher effektiv verhindert werden, dass beim Verfestigen des Aufbaumaterials entstehende Verschmutzungen sich nach oben zur Prozesskammerdecke hin ausbreiten. So kann einer Ansammlung von Verschmutzungen in oberen Bereichen der Prozesskammer und insbesondere einer Absetzung von Verschmutzungen an einem Einkoppelfenster oder anderen optischen Einrichtungen für eine zur selektiven Verfestigung benötigte Strahlung vorgebeugt werden.

Das Verfahren gemäß dem zweiten Aspekt der Offenbarung kann insbesondere vorteilhaft mit dem vorstehend beschriebenen Verfahren gemäß dem ersten Aspekt der Erfindung kombiniert werden. Mit anderen Worten kann der Deckengasstrom mit dem vorstehend beschriebenen Gasstrom mit einer länglichen ovalen Auftrefffläche innerhalb des Baufelds (nachfolgend mitunter unter den Begriff "Zentralgasstrom" subsumiert) beim erfindungsgemäßen Verfahren kombiniert werden. Da diese beiden Gasströme des Prozessgases in der Prozesskammer im Wesentlichen gleichgerichtet sind - nämlich im Wesentlichen senkrecht nach unten zum Baufeld hin -, stören sie einander nicht gegenseitig in ihrem Strömungsverlauf und damit auch nicht in ihrer reinigenden Wirkung. Insbesondere entstehen aufgrund der im Wesentlichen gleichen Richtung des Decken- und des Zentralgasstroms kaum Prozessgaswirbel, die den Abtransport von Verschmutzungen stören könnten.

Vielmehr ergibt sich bei der Kombination der beiden Aspekte ein vorteilhafter Synergieeffekt, weil der Deckengasstrom und der erfindungsgemäße Zentralgasstrom einander gegenseitig beim Abtransport von Verschmutzungen aus der Prozesskammer unterstützen. Während der Zentralgasstrom durch seine längliche ovale Auftrefffläche für einen effektiven Abtransport von Verschmutzungen unmittelbar über dem Baufeld sorgt, können alle übrigen Volumenbereiche der Prozesskammer mit dem Deckengasstrom weitgehend von Verschmutzungen freigehalten werden, indem der Deckengasstrom sie flächendeckend nach unten zum Baufeld und - bei geeigneter Anordnung eines oder mehrerer Auslässe - dorthin drückt.

Insbesondere kann der erfindungsgemäße Zentralgasstrom mit der länglichen ovalen Auftrefffläche auch als ein Teil des Deckengasstroms aufgefasst werden. Dies kann beispielsweise im Hinblick auf homogene und/oder flächendeckende Eigenschaften des Deckengasstroms der Fall sein.

Vorzugsweise sind beim Verfahren nach dem zweiten Aspekt die Deckeneinlässe derart ausgebildet und/oder angeordnet und/oder werden derart angesteuert, dass der Deckengasstrom in einem Bereich der Prozesskammer im Wesentlichen homogen geformt wird. Der genannte Bereich umfasst vertikal über dem Baufeld zumindest ein unterstes Zehntel, vorzugsweise zumindest ein unterstes Fünftel, besonders bevorzugt zumindest ein unterstes Drittel einer Höhe der Prozesskammer, die in senkrechter Richtung vom Baufeld bis zur Prozesskammerdecke gemessen ist. Alternativ oder zusätzlich umfasst der genannte Bereich in einer Ebene des Baufelds und/oder parallel über dem Baufeld mindestens die Fläche des Baufelds, vorzugsweise zusätzlich eine Umgebung des Baufelds, besonders bevorzugt im Wesentlichen eine Gesamtfläche eines Prozesskammerbodens.

Unter einer Umgebung des Baufelds wird eine seitliche Raumerstreckung um das Baufeld herum, z. B. innerhalb eines Abstandes von 5 cm um das Baufeld, verstanden.

Der Prozesskammerboden wird im Rahmen der Erfindung als ein das Baufeld, d. h. konkret eine eingangs erwähnte Bauunterlage oder eine darauf aufgebrachte obere Aufbaumaterialschicht, umfassendes Gebilde verstanden. Der Prozesskammerboden liegt unterhalb der Prozesskammerdecke. Er wird als eine Fläche in einer Ebene verstanden, im Wesentlichen ohne Niveauunterschied zwischen dem Baufeld und einer das Baufeld umrahmenden Bodenplatte.

Der Begriff "homogen" setzt dabei eine flächige Ausprägung des Deckengasstroms ohne Räume voraus, in denen ein Prozessgasvolumen im Wesentlichen ruht, oder sich andersartig oder undefiniert bewegt. Ferner wird eine im Wesentlichen gleiche Geschwindigkeit bei einem im Wesentlichen flächigen Deckengasstrom vorausgesetzt. Es ergibt sich somit eine stetige Abwärtsbewegung des eingeströmten Prozessgases in einem definierten Raumbereich der Prozesskammer. Die Homogenität ist beispielsweise als ein im Wesentlichen einheitlicher Staudruck auf einem bestimmten Höhenniveau in der Prozesskammer über dem Baufeld messbar.

Die Homogenität des Deckengasstroms kann beispielsweise durch eine Größe und/oder eine Dichte der Verteilung der Deckeneinlässe in der Prozesskammerdecke und/oder durch eine gleichmäßige oder ungleichmäßige Beaufschlagung der Deckeneinlässe mit dem Prozessgas beeinflusst werden. Weitere Kriterien sind beispielsweise die Zahl der Deckeneinlässe, eine Gesamtöffnungsquerschnittsfläche und Querschnittsform(en) der Deckeneinlässe.

Vorzugsweise weist beim Verfahren nach dem zweiten Aspekt die Prozesskammer einen unterhalb der Prozesskammerdecke liegenden Prozesskammerboden auf und das Baufeld erstreckt sich über einen Teilbereich des Prozesskammerbodens. Ferner ist eine Verteilung von Öffnungsquerschnittsflächen der Deckeneinlässe an der Prozesskammerdecke relativ zu einer Gesamtfläche des Prozesskammerbodens im Wesentlichen gleichmäßig, wobei die Deckeneinlässe so ausgebildet und/oder angeordnet sind und/oder angesteuert werden, dass Deckenteilgasströme des Deckengasstroms beim Austritt aus den Deckeneinlässen jeweils im Wesentlichen senkrecht zum Baufeld nach unten auf den Prozesskammerboden gerichtet sind.

Die gleichmäßige Verteilung kann beispielsweise dadurch erreicht werden, dass die Deckeneinlässe bei gleicher Ausbildung und/oder Öffnungsquerschnittsfläche zumindest ähnliche Abstände zueinander einnehmen. Es kann insbesondere bei einer eben gestalteten Prozesskammerdecke eine ähnliche Anzahl von Deckeneinlässen pro Quadrant bei einer Einteilung der Prozesskammerdecke oder des Prozesskammerbodens in identische Quadranten vorliegen. Es kann auch eine regelmäßige Verteilung von Deckeneinlässen bzw. von Öffnungsquerschnittsflächen der Deckeneinlässe pro Flächeneinheit der Prozesskammerdecke vorliegen. Beispielsweise kann ein Verhältnis einer Öffnungsfläche der Deckeneinlässe zu einer Prozesskammerbodenfläche stets zwischen 1/10 und 1/30, im Mittel 1/20, bei einer Untergliederung des Prozesskammerbodens in 25 oder 100 Quadranten betragen. Dabei kann die Öffnungsquerschnittsfläche mittels einer Orthogonalprojektion der Öffnungen der Deckeneinlässe auf den Prozesskammerboden derart berechnet werden, dass bei nicht vollständiger Orientierung der Deckeneinlässe zum Prozesskammerboden lediglich ein Teil der tatsächlichen Öffnungsquerschnittsfläche gewertet wird.

"Im Wesentlichen senkrecht" bedeutet dabei, dass die Querschnitte einzelner Teilströme des Deckengasstroms auch aufgefächert werden können, sodass sich z. B. kegelförmige Teilströme ergeben.

Beim Verfahren nach dem zweiten Aspekt kann der aus Deckenteilgasströmen bestehende Deckengasstrom im Wesentlichen laminar von der Prozesskammerdecke in Richtung zum Prozesskammerboden hin fließen. Bei einer hierzu alternativen Ausbildung kann eine geringe Zahl an Deckeneinlässen mit geringer Austrittsgeschwindigkeit vorliegen, sodass sich auf dem Weg zum Baufeld jeder einzelne Strahldurchmesser vergrößert und die Strahlen leicht kegelförmig werden.

Vorzugsweise wird beim Verfahren nach dem zweiten Aspekt der Deckengasstrom zumindest zeitweise vor und/oder während und/oder nach dem selektiven Verfestigen des Aufbaumaterials, bevorzugt im Wesentlichen während des gesamten Vorgangs des selektiven Verfestigens, durch die Prozesskammer geleitet. Vorzugsweise ist der Deckengasstrom dabei auch zwischen zwei Verfestigungsvorgängen aktiv, z. B. in einer betriebsbedingten Pause des Verfestigungsvorgangs, um die Prozesskammer-Atmosphäre zu reinigen, damit Verschmutzungen wie Schmauch nicht unkontrolliert durch die Prozesskammer wabern, sondern zuverlässig in einem unteren Bereich der Prozesskammer gehalten werden und/oder besonders bevorzugt durch eine Auslasseinrichtung abtransportiert werden.

Bei einer vorteilhaften Ausführungsform des Verfahrens nach dem zweiten Aspekt umfasst die Prozesskammerdecke einen Hohlraum mit einer Wandung, die in einem von der Prozesskammer abgewandten Außenwandbereich im Wesentlichen geschlossen ist und in einem an die Prozesskammer angrenzenden Innenwandbereich Deckeneinlässe aufweist. Der Hohlraum dient dabei als eine Zwischenzone zwischen einer oder mehreren Zufuhrleitungen in den Hohlraum und den Deckeneinlässen, die ein Prozessgasvolumen aus dem Hohlraum in die Prozesskammer führen.

Vorzugsweise ist der Hohlraum derart ausgestaltet, insbesondere hinsichtlich einer geeigneten Höhe in der zum Baufeld senkrechten Richtung, dass ein durch die Zuführleitung(en) einströmendes Prozessgasvolumen sich zunächst im Hohlraum ausbreitet, statt unmittelbar durch naheliegende Deckeneinlässe weiter in Richtung der Prozesskammer zu fließen. Dazu kann die Innenwandfläche Prallflächen gegenüber Öffnungen der Zuführleitung(en) zum Hohlraum hin aufweisen, welche einen ankommenden Prozessgasstrahl vorzugsweise allseitig in den Hohlraum umlenken. In vorteilhafter Weise kann durch eine möglichst weitgehende Füllung bzw. Flutung des Hohlraums mit Prozessgas vor einem Weitertransport in die Prozesskammer eine Homogenität des Deckengasstroms erheblich verbessert werden, indem Teilströme des Gasstroms in im Wesentlichen gleicher Geschwindigkeit aus den Deckeneinlässen in die Prozesskammer hineinströmen. Zusätzlich kann der Hohlraum auch zu einer Beruhigung des hineingeführten Prozessgases führen, indem dessen Geschwindigkeit nach dem Entweichen aus der/den Zufuhrleitung(en) deutlich verlangsamt wird, bevor es in die Prozesskammer strömt.

Der Innenwandbereich kann grundsätzlich einen beliebigen Anteil der Fläche der Prozesskammerdecke einnehmen. Vorzugsweise ist es ein möglichst großer Anteil mit dem Vorteil einer besseren Flächigkeit und damit Homogenität des Deckengasstroms. Dass der Außenwandbereich "im Wesentlichen geschlossen" ist, heißt insbesondere, dass bauliche Einrichtungen wie etwa Zufuhrleitungen eine Ausnahme bilden.

Bei einer Weiterbildung der obigen Ausführungsform ist der Innenwandbereich im Wesentlichen durch eine Platte, vorzugsweise eine Lochplatte, gebildet. Dabei sind die Deckeneinlässe zumindest teilweise durch Löcher der Platte oder der Lochplatte gebildet. Die Platte oder die Lochplatte weist dabei mindestens 10 Löcher, vorzugsweise mindestens 100 Löcher, besonders bevorzugt mindestens 1000 Löcher auf. Alternativ oder zusätzlich beträgt dabei eine durchschnittliche Öffnungsquerschnittsfläche der Löcher höchstens 10 cm², vorzugsweise höchstens 2 cm², besonders bevorzugt höchstens 0,1 cm². Ebenso alternativ oder zusätzlich beträgt dabei eine Summe der Öffnungsquerschnittsflächen der Löcher höchstens 20% einer Gesamtfläche eines Prozesskammerbodens, vorzugsweise höchstens 10% einer Gesamtfläche des Prozesskammerbodens, besonders bevorzugt höchstens 5% einer Gesamtfläche des Prozesskammerbodens.

Die Lochplatte kann beispielsweise ein gestanztes oder perforiertes Blech oder eine poröse Platte aus beliebigem Material sein. Die Lochplatte kann auch beispielsweise ein oder mehrere feinmaschige Drahtgitter darstellen, z. B. eine Filtermatte. Alternativ kann hierfür eine Kassette mit Kanälen einer geeigneten Länge verwendet werden, deren Ausrichtung im Wesentlichen identisch mit der Flussrichtung der Deckengasströmung im Wesentlichen senkrecht zum Baufeld ist. Solche Kanäle haben den Vorteil einer Verbesserung von Verteilung und Gestalt des Deckengasstroms durch Führung der einzelnen Deckengasteilströme und zusätzliche Verminderung von Turbulenzen.

Vorzugsweise ist beim Verfahren nach dem zweiten Aspekt zumindest ein Deckeneinlass und/oder zumindest ein zusätzlicher Gaseinlass in die Prozesskammer so ausgebildet und/oder wird so angesteuert, dass in Abhängigkeit von einer räumlichen Gestaltung der Prozesskammer und/oder von einer Position und/oder Größe einer innerhalb der Prozesskammer angeordneten Vorrichtung eine Geschwindigkeit und/oder eine Ausrichtung und/oder ein Strahlquerschnitt eines aus dem Deckeneinlass oder dem zusätzlichen Gaseinlass herausströmenden Deckenteilgasstroms vor und/oder während und/oder nach der Herstellung des Objekts variiert werden. Der zusätzliche Gaseinlass kann dabei beispielsweise ein Einlass eines Zentralgasstroms gemäß dem obigen ersten Aspekt der Erfindung sein.

Diese Ausgestaltung ermöglicht eine gezielte Ansteuerung von Einlässen wie z. B. Düsen, um bewusst inhomogene Zonen innerhalb der Prozesskammer zu schaffen. Solche gezielt erzeugten Inhomogenitäten der Deckeneinströmung können z. B. bei spezifischen Prozesskammergeometrien vorteilhaft sein, beispielsweise bei zerklüfteter oder kurvierter Gestaltung der Prozesskammerwandung, oder bei variabler Strömungsführung innerhalb der Prozesskammer, wie z. B. durch verstellbare Leitflächen. Eine selektive höhere Geschwindigkeit bestimmter Deckenteilgasströme oder eine gezielte und kontrollierte Erzeugung von Wirbeln kann die Befreiung und Freihaltung von Ecken, Nischen, etc. in der Prozesskammer, die sonst ungenügend vom Prozessgas gespült werden würden, von Verschmutzungen effektiver gestalten.

Dies ist insbesondere auch vereinbar mit einem homogenen Herabsinken des Prozessgases über dem Baufeld und in einer Umgebung des Baufeldes, z. B. innerhalb eines seitlichen Abstandes von 5 cm um das Baufeld. Wenn beispielsweise eine oder mehrere Seitenwände der Prozesskammer kurviert ausgeführt sind, kann ein zurückzulegender Weg für Deckenteilgasströme entlang der entsprechenden Seitenwand länger sein als in der Mitte des Baufeldes. Für eine vorteilhafte "homogene" Formung des herabsinkenden Prozessgasteppichs kann nun eine Geschwindigkeit der Deckenteilgasströme zu den Randbereichen hin derart höher eingestellt werden, dass die längere Wegstrecke kompensiert wird und die am Prozesskammerboden ankommenden Deckenteilgasströme eine ähnliche oder gleiche Geschwindigkeit haben.

Bei einer vorteilhaften Ausführungsform des Verfahrens nach dem zweiten Aspekt weist die Prozesskammerdecke mindestens ein Einkoppelfenster zum Einkoppeln einer zum Verfestigen des Aufbaumaterials dienenden Strahlung in die Prozesskammer auf. Ferner sind dabei die Deckeneinlässe im Wesentlichen gleichmäßig über einen gesamten Bereich der Prozesskammerdecke verteilt, mit Ausnahme eines vom mindestens einen Einkoppelfenster eingenommenen Bereichs. Neben einem oder mehreren Einkoppelfenstern kann eine derartige Aussparung in der Prozesskammerdecke auch beispielsweise eine Kamera oder weitere Sensorik zur Prozessüberwachung aufweisen.

Bei einer Weiterbildung dieser Ausführungsform weist/weisen die Prozesskammerdecke und/oder der Innenwandbereich in einem an das mindestens eine Einkoppelfenster angrenzenden Abschnitt mindestens einen Zentraleinlass auf, welcher derart ausgebildet ist und/oder angesteuert wird, dass im Betrieb daraus ein zentraler Deckenteilgasstrom zum Baufeld hin herausströmt und vorzugsweise derart aufgeweitet wird, dass der zentrale Deckenteilgasstrom bezogen auf eine Prozesskammerhöhe zwischen dem Baufeld und dem senkrecht darüber liegenden mindestens einen Einkoppelfenster zumindest in einem untersten Zehntel, vorzugsweise zumindest in einem untersten Fünftel, besonders bevorzugt zumindest in einem untersten Drittel der Prozesskammer an seinen Rändern gegen benachbarte Deckenteilgasströme konvergiert oder mit diesen überlappt. Dadurch entsteht zumindest über das gesamte Baufeld hinweg und vorzugsweise zusätzlich in einer Umgebung des Baufelds eine im Wesentlichen vollflächige Gasströmung, die in einer kontrollierten Weise zum Baufeld hin strömt.

Der Deckengasstrom muss hier hinsichtlich seiner Geschwindigkeit nicht homogen im Sinne der obigen Definition sein. Zum Erreichen eines besonders effektiven Abtransports von Verschmutzungen kann hier beispielsweise der zentrale Deckenteilgasstrom eine höhere Geschwindigkeit haben als die übrigen Deckenteilgasströme.

Die Aufweitung wird hier als auf den Querschnitt des Deckenteilgasstroms bezogen verstanden. Sie kann beispielsweise kegelförmig erfolgen, um den zentralen Deckenteilgasstrom auch in Bereiche der Prozesskammer zu lenken, in denen ein Prozessgasvolumen sonst im Wesentlichen ruhen oder sich undefiniert bewegen würde, weil sie nicht direkt durch einen etwa aus dem Hohlraum strömenden Deckengasstrom beaufschlagt werden. Insbesondere kann dies für unterhalb eines Einkoppelfensters liegende Bereiche der Fall sein.

Mit anderen Worten erfolgt hier vorzugsweise eine Aufweitung in einem solchen Ausmaß, dass Konturen von Projektionen, und zwar nicht Orthogonalprojektionen, dreidimensionaler Innenwandungen des Zentraleinlasses und der unmittelbar benachbarten Deckeneinlässe auf das Baufeld sich annähern, berühren oder überlappen, wodurch zumindest in einem untersten Zehntel, vorzugsweise zumindest in einem untersten Fünftel, besonders bevorzugt zumindest in einem untersten Drittel einer Prozesskammerhöhe ein im Wesentlichen homogener Deckengasstrom geformt wird.

Besonders bevorzugt sind bei dieser Weiterbildung eine Mehrzahl von derartigen Zentraleinlässen um das oder die Einkoppelfenster angeordnet, um eine Vergleichmäßigung des Deckengasstroms zu erzielen. Die Einlassdüsen können dabei auch derart ausgebildet sein, dass im Querschnitt asymmetrische Deckenteilgasströme erzeugt werden.

Bei einer vorteilhaften Ausführungsform des Verfahrens nach dem zweiten Aspekt wird zumindest zeitweise vor und/oder während und/oder nach der Herstellung des Objekts das Prozessgas der Prozesskammer in einem vorzugsweise geschlossenen Prozessgaskreislauf zugeführt und aus dieser durch einen Auslass abgeführt. Dabei stellt der Deckengasstrom zumindest einen Teil des Prozessgaskreislaufs dar. Ferner umfassen dabei Zu- und/oder Ableitungen des Prozessgaskreislaufs eine Fördereinheit, mittels welcher eine Geschwindigkeit und/oder Geschwindigkeitsverteilung und/oder Druckverteilung eines Gesamtprozessgasstroms oder des Deckengasstroms in der Prozesskammer vor und/oder während und/oder nach der Herstellung des Objekts geändert wird.

Die Zuführung/Abführung kann dabei kontinuierlich, stetig, dynamisch, in regelmäßigen und/oder unregelmäßigen Intervallen etc. erfolgen. Die Fördereinheit kann beispielsweise eine schaltbare Pumpe, Turbine oder Pumpturbine und/oder auch einen Propeller umfassen. Durch die genannte Variation des Deckengasstroms, insbesondere auch im Verhältnis zum Gesamtprozessgasstrom, können die Prozessgasverteilung in der Prozesskammer und/oder der Abtransport von Verschmutzungen daraus gesteuert und so beispielsweise an spezifische Eigenschaften der Prozesskammer und des herzustellenden Objekts in einem konkreten Anwendungsfall und/oder an spezifische Prozessphasen angepasst werden. So kann der Prozessgasdurchsatz des Gesamtprozessgasstroms oder des Deckengasstroms in der Prozesskammer insbesondere in Prozessphasen mit einer erhöhten Verschmutzungsentstehung erhöht werden.

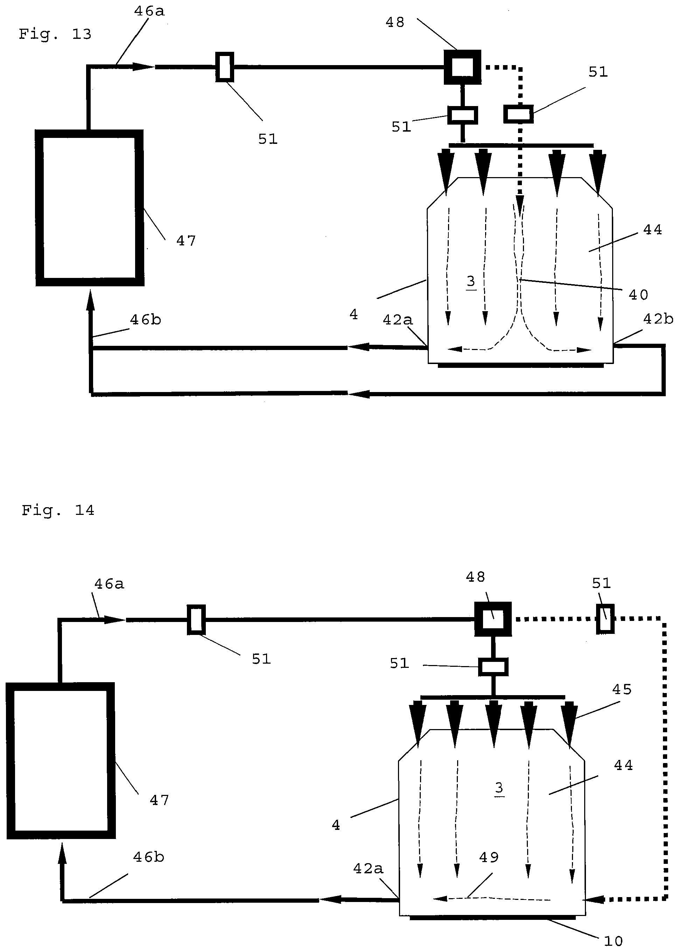

Bei einer vorteilhaften Weiterbildung dieser Ausführungsform umfasst der Prozessgaskreislauf zusätzlich zum Deckengasstrom mindestens einen der folgenden Gasströme zum Abtransportieren beim Verfestigen des Aufbaumaterials entstehender Verschmutzungen aus der Prozesskammer:
- einen Zentralgasstrom, der der Prozesskammer zumindest zeitweise vor und/oder während und/oder nach der Herstellung des Objekts mittels eines in der Prozesskammerdecke ausgebildeten Zentraleinlasses zugeführt wird, und über zumindest einen Auslass aus der Prozesskammer abgeführt wird, wobei der Zentralgasstrom innerhalb eines Zentralbereichs des Baufelds im Wesentlichen rechtwinklig zum Baufeld, insbesondere unter mindestens 45°, vorzugsweise unter mindestens 60°, besonders bevorzugt unter mindestens 70°, auftrifft (vgl. Fig. 13),
- einen Seitengasstrom, der der Prozesskammer zumindest zeitweise vor und/oder während und/oder nach der Herstellung des Objekts über einen an einer Baufeldseite angeordneten Seiteneinlass zugeführt wird und über zumindest einen an einer gegenüber liegenden Baufeldseite angeordneten Auslass aus der Prozesskammer abgeführt wird, vorzugsweise derart, dass der Seitengasstrom im Wesentlichen laminar im Wesentlichen über einer bevorzugt gesamten Baufeldfläche verläuft (vgl. Fig. 14).

Eine Auftrefffläche des Zentralgasstroms innerhalb des Baufelds kann hierbei eine beliebige Form haben. Die Form der Auftrefffläche kann beispielsweise kreisförmig sein. Im Falle eines Zentralgasstroms, der den weiter oben beschriebenen Gasstrom gemäß dem ersten Aspekt der Erfindung darstellt, kann seine im Wesentlichen längliche ovale Auftrefffläche regelmäßig bis hin zu elliptisch oder aber unregelmäßig sein. Die Form der Auftrefffläche kann auch im Betrieb variabel sein, z. B. wenn ein Beschichter zum Aufbringen einer Aufbaumaterialschicht über das Baufeld fährt und dabei den Zentralgasstrom für einen gewissen Zeitraum ablenkt bzw. instabil macht. Sie kann in Wechselwirkung mit einer Ausbildung, Anordnung und/oder Ansteuerung eines oder mehrerer Auslässe gestaltet bzw. gewählt sein oder werden.

Wie weiter oben in Bezug auf den ersten Aspekt der Erfindung beschrieben, kann auch hier der Zentralbereich innerhalb des Baufelds beispielsweise nicht mehr als etwa 60%, vorzugsweise nicht mehr als etwa 20%, besonders bevorzugt nicht mehr als etwa 10% einer Gesamtfläche des Baufelds einnehmen.

Bei einer weiteren vorteilhaften Weiterbildung der obigen Ausführungsform beträgt ein vorzugsweise einstellbares Volumenverhältnis des Deckengasstroms zum Zentralgasstrom und/oder zum Seitengasstrom im Prozessgaskreislauf mindestens 1:1, vorzugsweise mindestens 2:1, besonders bevorzugt mindestens 3:1, und/oder höchstens 7:1, vorzugsweise höchstens 6:1, besonders bevorzugt höchstens 5:1. Durch ein solches Volumenverhältnis können beispielsweise eine konkrete Baufeldgröße und/oder Prozesskammerhöhe vom Baufeld bis zur Prozesskammerdecke in einem Anwendungsfall berücksichtigt werden.

Bei einer weiteren vorteilhaften Weiterbildung der obigen Ausführungsform wird ein Verhältnis einer gesamten Einlassöffnungsfläche zu einer gesamten Auslassöffnungsfläche des Prozessgaskreislaufs vor und/oder während und/oder nach dem Herstellen des Objekts variiert. Dadurch werden/wird eine Geschwindigkeit und/oder ein Druck des Prozessgases zumindest in einem Teilbereich der Prozesskammer verändert. So kann alternativ oder zusätzlich zu einer oben erwähnten einstellbaren Fördereinheit die Geschwindigkeit der Prozessgasumwälzung im Prozessgaskreislauf vorteilhaft variiert oder angepasst werden.

Vorzugsweise wird beim Verfahren nach dem zweiten Aspekt das selektive Verfestigen mittels einer Verfestigungseinrichtung durchgeführt, die mindestens zwei Verfestigungseinheiten umfasst. Dabei ist jeder Verfestigungseinheit ein Bearbeitungsbereich innerhalb des Baufelds zugeordnet. Die Bearbeitungsbereiche sind vorzugsweise symmetrisch bezüglich einer zum Baufeld senkrechten Mittenebene oder Mittenachse, die durch einen Mittelpunkt des Baufelds geht, angeordnet sind. Insbesondere gilt hier das weiter oben in Bezug auf mehrere Verfestigungseinheiten beim ersten Aspekt der Erfindung Ausgeführte entsprechend.

Ein weiterer Aspekt der Erfindung ist eine Steuereinheit für eine Vorrichtung zum generativen Herstellen eines dreidimensionalen Objekts, wobei die Steuereinheit zur Generierung von Steuerbefehlen zur vorzugsweise automatisierten Durchführung eines Verfahrens nach dem ersten Aspekt der Erfindung und/oder zweiten Aspekt der Offenbarung ausgebildet ist.

Ein wiederum weiterer Aspekt der Erfindung ist eine Vorrichtung zum generativen Herstellen eines dreidimensionalen Objekts, die zu einer vorzugsweise automatisierten Durchführung eines Verfahrens nach dem ersten Aspekt der Erfindung und/oder zweiten Aspekt der Offenbarung ausgebildet ist und/oder angesteuert wird. Dabei kann die Ansteuerung beispielsweise mittels der erfindungsgemäßen Steuereinheit erfolgen. Die erfindungsgemäße Herstellvorrichtung umfasst eine Prozesskammer zum Herstellen des Objekts durch schichtweises Aufbringen und selektives Verfestigen eines Aufbaumaterials innerhalb eines in der Prozesskammer angeordneten Baufelds.

Ferner umfasst die Vorrichtung beim ersten Aspekt der Erfindung eine Gaszufuhreinrichtung zum Zuführen eines Prozessgases der Prozesskammer während der Herstellung des Objekts sowie einen Auslass zum Abführen des Prozessgases aus der Prozesskammer. Erfindungsgemäß ist dabei die Gaszufuhreinrichtung so ausgebildet und/oder relativ zum Baufeld angeordnet ist und/oder wird so angesteuert, dass ein durch die Prozesskammer fließender Gasstrom des Prozessgases derart geformt wird, dass mindestens eine im Wesentlichen längliche ovale Auftrefffläche des Gasstroms innerhalb des Baufelds erzeugt wird.

Beim zweiten Aspekt weist die Prozesskammer der Vorrichtung eine Kammerwandung mit einer oberhalb des Baufelds liegenden Prozesskammerdecke auf. In der Prozesskammerdecke sind mehrere Deckeneinlässe zum Zuführen eines Deckengasstroms der Prozesskammer ausgebildet, die über einen Bereich der Prozesskammerdecke verteilt sind und die so ausgebildet und/oder angeordnet sind und/oder angesteuert werden, dass der Deckengasstrom beim Austritt aus den Deckeneinlässen im Wesentlichen senkrecht nach unten auf das Baufeld gerichtet ist.

Für die Herstellvorrichtung nach dem ersten Aspekt der Erfindung und/oder dem zweiten Aspekt der Offenbarung gilt im Übrigen das weiter oben in Bezug auf das erfindungsgemäße Verfahren Gesagte entsprechend.

Die vorstehend angegebenen und weitere Merkmale und Wirkungen der Erfindung werden nachfolgend anhand von Ausführungsbeispielen unter Bezugnahme auf die Zeichnungen näher beschrieben. Die Darstellung der Herstellvorrichtung, des erfindungsgemäßen Zentralgasstroms, der beim ersten Aspekt auch kurz einfach "Gasstrom" bezeichnet wird, seiner Auftrefffläche innerhalb eines Baufelds und des Deckengasstroms (zweiter Aspekt der Offenbarung) ist in den Zeichnungen rein schematisch und daher nicht als maßstabsgetreu zu verstehen. Gleiche oder einander entsprechende Elemente sind in verschiedenen Beispielen mit gleichen oder entsprechenden Bezugszeichen gekennzeichnet.

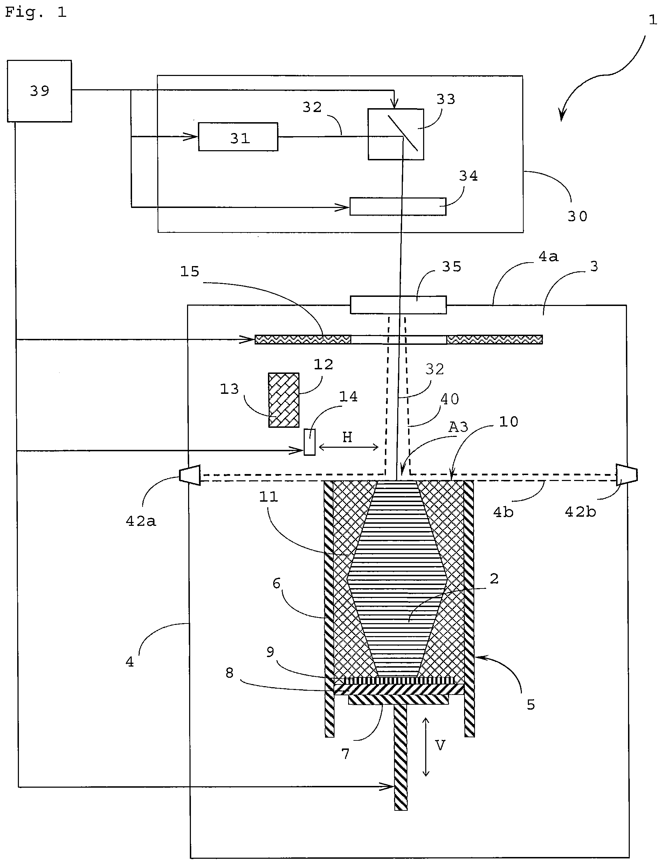

- Fig. 1: ist eine schematische seitliche Schnittdarstellung einer Ausführungsform der erfindungsgemäßen Herstellvorrichtung mit mindestens einer Verfestigungseinheit;
- Fig. 2: ist eine schematische seitliche Schnittdarstellung einer weiteren Ausführungsform der erfindungsgemäßen Herstellvorrichtung mit mindestens zwei Verfestigungseinheiten;
- Fig. 3: ist eine schematische Darstellung eines zum Baufeldrand abfließenden Gasstroms mit einer herkömmlichen kreisrunden Auftrefffläche innerhalb des Baufelds (in Draufsicht) ;
- Fig. 4: ist eine schematische Darstellung eines zum Baufeldrand abfließenden Gasstroms mit einer herkömmlichen länglichen rechteckigen Auftrefffläche innerhalb des Baufelds (in Draufsicht);
- Fig. 5: ist eine schematische Darstellung eines zum Baufeldrand abfließenden Gasstroms in der Nähe einer "Längsseite" einer erfindungsgemäßen länglichen ovalen Auftrefffläche innerhalb des Baufelds (in Draufsicht);
- Fig. 6: ist eine schematische Darstellung eines zum Baufeldrand abfließenden Gasstroms in der Nähe einer "Schmalseite" einer erfindungsgemäßen länglichen ovalen Auftrefffläche innerhalb des Baufelds (in Draufsicht);
- Fig. 7: ist eine schematische Draufsicht auf ein Beispiel der Anordnung eines Baufelds in der Prozesskammer einer erfindungsgemäßen Herstellvorrichtung mit Stromlinien des Gasstroms über dem Baufeld;
- Fig. 8: ist eine schematische seitliche Schnittdarstellung einer Anordnung eines Einlasses relativ zu einem Baufeld mit Stromlinien eines erfindungsgemäßen Gasstroms in der Prozesskammer;
- Fig. 9a und 9b: sind schematische Draufsichten auf Beispiele eines Einlasses einer erfindungsgemäßen Gaszufuhreinrichtung mit auffächernder Wirkung;
- Fig. 9c: zeigt zwei um 90° gegeneinander verdrehte Seitenansichten eines weiteren Beispiels eines Einlasses der erfindungsgemäßen Gaszufuhreinrichtung mit auffächernder Wirkung;
- Fig. 9d: zeigt schematisch links eine prozesskammerseitige Draufsicht und rechts eine perspektivische Ansicht des Einlasses aus Fig. 9c;
- Fig. 10a: ist eine schematische seitliche Schnittdarstellung einer Prozesskammer einer erfindungsgemäßen Herstellvorrichtung mit vier Verfestigungseinheiten (mit Laserstrahlengang);
- Fig. 10b: ist eine schematische Draufsicht auf Bearbeitungsbereiche der vier Verfestigungseinheiten innerhalb des Baufelds der Prozesskammer aus Fig. 10a;
- Fig. 11a: ist eine schematische Draufsicht auf ein Beispiel einer Baufelderweiterung in einer erfindungsgemäßen Herstellvorrichtung durch drei aneinandergereihte Auftreffflächen des Gasstroms;
- Fig. 11b: ist eine schematische Draufsicht auf ein Beispiel einer Baufelderweiterung in einer erfindungsgemäßen Herstellvorrichtung, deren Verfestigungseinrichtung sechs Verfestigungseinheiten aufweist;

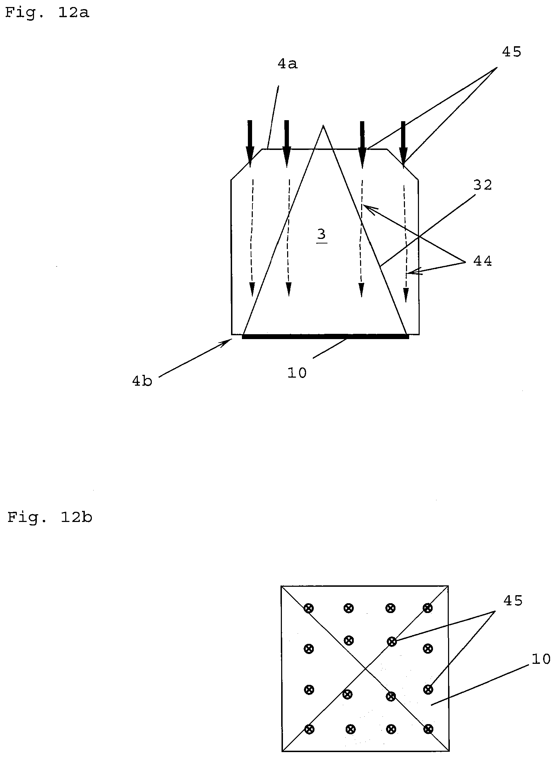

- Fig. 12a: ist eine schematische seitliche Schnittdarstellung der Prozesskammer einer Herstellvorrichtung mit einem Deckengasstrom;
- Fig. 12b: ist eine schematische Draufsicht auf das Baufeld und auf die Deckeneinlässe in der Herstellvorrichtung aus Fig. 12a;
- Fig. 13: ist eine schematische seitliche Schnittdarstellung einer erfindungsgemäßen Herstellvorrichtung, in der ein Zentralgasstrom mit einem Deckengasstrom in einem Prozessgaskreislauf kombiniert ist;
- Fig. 14: ist eine schematische seitliche Schnittdarstellung einer Herstellvorrichtung, in der ein Seitengasstrom mit einem Deckengasstrom in einem Prozessgaskreislauf kombiniert ist;

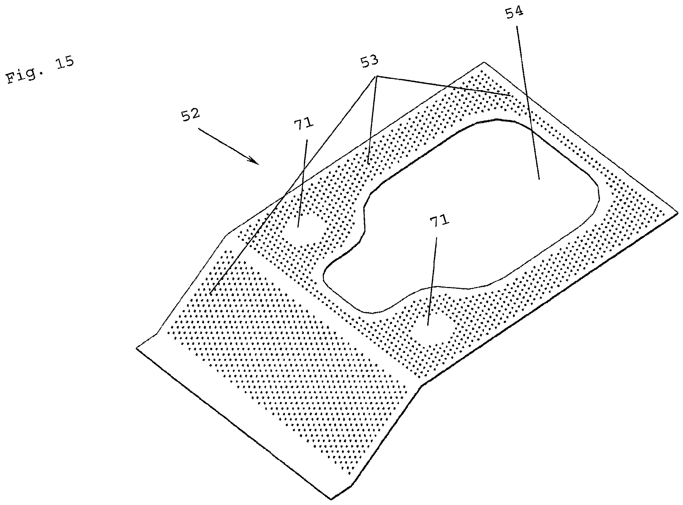

- Fig. 15: ist eine schematische perspektivische Ansicht eines Lochblechs zur Erzeugung des Deckengasstroms;

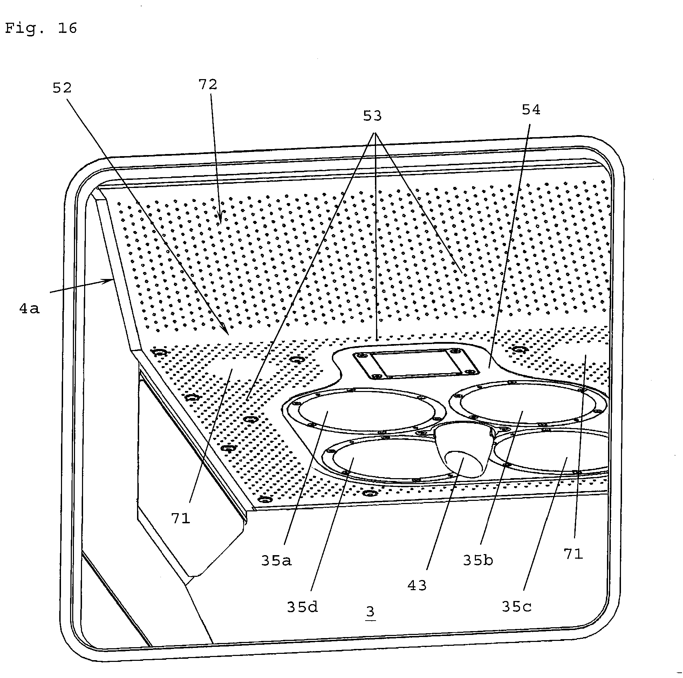

- Fig. 16: ist eine schematische perspektivische Ansicht schräg von unten des Lochblechs aus Fig. 15 in einem eingebauten Zustand in der Decke einer Prozesskammer;

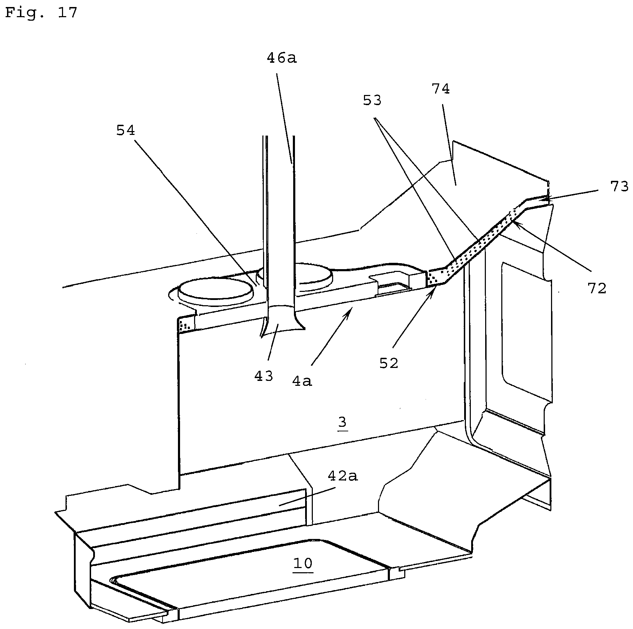

- Fig. 17: ist eine schematische perspektivische Ansicht schräg von oben und teilweise in einem vertikalen Querschnitt einer Prozesskammer mit einem in deren Decke eingebauten Lochblech aus Figuren 15 und 16.

Mit Bezug auf Fig. 1 wird eine Ausführungsform einer Vorrichtung 1 zum generativen Herstellen eines dreidimensionalen Objekts beschrieben, die zu einer vorzugsweise automatisierten Durchführung eines erfindungsgemäßen Herstellverfahrens ausgebildet ist und/oder angesteuert wird. Die in Fig. 1 schematisch dargestellte Schichtbauvorrichtung 1 ist eine Lasersinter- oder Laserschmelzvorrichtung. Zum Herstellen eines dreidimensionalen Objekts 2 durch schichtweises Aufbringen und selektives Verfestigen eines Aufbaumaterials enthält sie eine Prozesskammer 3 mit einer Kammerwandung 4, die eine Prozesskammerdecke 4a umfasst.

In der Prozesskammer 3 ist ein nach oben offener Behälter 5 mit einer Behälterwandung 6 angeordnet. Im Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt vom Träger 7 gebildete Platte sein, die am Träger 7 befestigt ist, oder sie kann integral mit dem Träger 7 gebildet sein. Je nach verwendetem Aufbaumaterial (insbesondere Pulver) und Prozess kann auf der Grundplatte 8 noch eine Plattform 9 als Bauunterlage angebracht sein, auf der das Objekt 2 aufgebaut wird. Das Objekt 2 kann aber auch auf der Grundplatte 8 selbst aufgebaut werden, die dann als Bauunterlage dient. In Fig. 1 ist das im Behälter 5 auf der Plattform 9 zu bildende Objekt 2 unterhalb eines durch den oberen Rand der Behälterwandung 6 definierten Baufelds 10 in einem Zwischenzustand dargestellt mit mehreren bereits verfestigten Schichten, umgeben vom unverfestigt gebliebenen Aufbaumaterial 11.

Die Lasersintervorrichtung 1 enthält weiter einen Vorratsbehälter 12 für ein durch elektromagnetische Strahlung verfestigbares, in diesem Beispiel pulverförmiges Aufbaumaterial 13 und einen in einer horizontalen Richtung H verfahrbaren Beschichter 14 zum schichtweisen Auftragen des Aufbaumaterials 13 auf die Bauunterlage oder auf eine zuletzt aufgetragene Schicht innerhalb des Baufelds 10. Optional ist in der Prozesskammer 3 eine Strahlungsheizung 15 zum Heizen des aufgebrachten Aufbaumaterials 13 angeordnet. Als Strahlungsheizung 15 kann beispielsweise ein Infrarotstrahler dienen.

Zum selektiven Verfestigen des aufgetragenen Aufbaumaterials 13 enthält die Lasersintervorrichtung 1 eine Verfestigungseinrichtung 30 (nachfolgend auch Belichtungseinrichtung genannt) mit einem Laser 31, der einen Laserstrahl 32 erzeugt. Der Laserstrahl 32 wird über eine Umlenkeinrichtung 33 umgelenkt und durch eine Fokussiereinrichtung 34 über ein Einkoppelfenster 35, das in der Prozesskammerdecke 4a angebracht ist, auf die Bauunterlage oder eine zuletzt aufgetragene Schicht des Aufbaumaterials 13 fokussiert. Die Verfestigungseinrichtung 30 kann grundsätzlich auch weitere, im Seitenschnitt in Fig. 1 nicht sichtbare Verfestigungseinheiten mit weiteren Lasern und/oder Umlenk- und Fokussiereinrichtungen und/oder Einkoppelfenstern umfassen.

Weiter enthält die Lasersintervorrichtung 1 eine Steuereinheit 39, über die die einzelnen Bestandteile der Vorrichtung in koordinierter Weise zum Durchführen des Bauprozesses, insbesondere eines erfindungsgemäßen Verfahrens, gesteuert werden (in Fig. 1 durch Pfeile angedeutet). Alternativ oder zusätzlich kann eine Steuereinheit auch teilweise oder ganz außerhalb der Vorrichtung 1 angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit 39, geladen werden kann. Bei der Steuereinheit handelt es sich vorzugsweise um eine erfindungsgemäße Steuereinheit.

Im Betrieb befindet sich die Bauunterlage, die in diesem Beispiel eine Oberfläche der Plattform 9 ist, zu Beginn des Herstellvorgangs auf der Höhe des Baufelds 10 und wird zum Aufbringen einer Aufbaumaterialschicht jeweils um eine Höhe abgesenkt, die der gewünschten Schichtdicke entspricht. Durch Verfahren des Beschichters 14 innerhalb des Baufelds 10 wird jeweils eine Schicht des pulverförmigen Aufbaumaterials 13 auf die Bauunterlage oder eine bereits vorhandene obere Pulverschicht aufgetragen. Das Auftragen erfolgt zumindest über den gesamten jeweiligen Querschnitt des herzustellenden Objekts 2. Optional wird das pulverförmige Aufbaumaterial 13 mittels der Strahlungsheizung 15 auf eine Arbeitstemperatur aufgeheizt. Anschließend wird der Querschnitt des herzustellenden Objekts 2 vom Laserstrahl 32 gescannt, sodass das pulverförmige Aufbaumaterial 13 an den Stellen verfestigt wird, die dem Querschnitt des Objekts 2 entsprechen. Diese Schritte werden solange wiederholt, bis das Objekt 2 fertiggestellt ist.

Erfindungsgemäß wird der Prozesskammer 3 durch eine in der Prozesskammerdecke 4a angeordnete Gaszufuhreinrichtung (nicht gezeigt) während der Herstellung des Objekts 2 ein Gasstrom 40 eines Prozessgases zugeführt, um beim selektiven Verfestigen entstehende Verschmutzungen aus der Prozesskammer 3 zu entfernen. Ein prozesskammerseitiger Einlass der Gaszufuhreinrichtung (in Fig. 1 nicht gezeigt) kann eine beliebige geeignete Anordnung in der Prozesskammerdecke 4a und Ausgestaltung haben. Der Gasstrom 40 verlässt die Prozesskammer 3 durch an gegenüberliegenden Baufeldseiten etwa in Baufeldhöhe angeordnete Auslässe 42a und 42b. Die Auslässe 42a und 42b sind in Fig. 1 rein schematisch angedeutet. Sie können jede geeignete Anordnung und Geometrie haben, insbesondere gemäß den weiter oben ausgeführten vorteilhaften Ausgestaltungen der Erfindung. Insbesondere können die Auslässe 42a und 42b in oder an der Kammerwandung 4, unmittelbar am Baufeldrand oder in einem Abstand davon sowie nicht zwingend in Baufeldhöhe angeordnet sein.

Nach Verlassen der Gaszufuhreinrichtung strömt der Gasstrom 40 durch die Prozesskammer 3 ungeführt und im Wesentlichen senkrecht, das bedeutet bis auf ein mögliches Wabern des Gasstroms 40 und eine geringfügige Abweichung von Randbereichen des Gasstroms 40 um bis zu etwa 20° von einer Lotrechten bezüglich des Baufelds 10, zum Baufeld 10 hin. Dort trifft der Gasstrom 40 in einer zentral innerhalb des Baufelds 10 liegenden erfindungsgemäßen Auftrefffläche A3 auf die obere Aufbaumaterialschicht auf und wird teils von dieser, teils durch gegebenenfalls vorhandene Saugwirkung seitens der Auslässe 42a und 42b seitlich abgelenkt. Anschließend fließt der Gasstrom, vorzugsweise im Wesentlichen parallel zum Baufeld 10, in Richtung der Auslässe 42a und 42b ab und transportiert dabei Verschmutzungen aus der Prozesskammer 3 ab.

Fig. 2 zeigt eine weitere Ausführungsform der erfindungsgemäßen Herstellvorrichtung 1. Sie unterscheidet sich von der Vorrichtung aus Fig. 1 in der Ausgestaltung der Verfestigungseinrichtung 30 und einer spezifischen Ausgestaltung eines prozesskammerseitigen Einlasses der Gaszufuhreinrichtung.

Die Herstellvorrichtung 1 in Fig. 2 ist eine sogenannte Mehr-Scanner-Maschine, denn die Verfestigungseinrichtung 30 umfasst mehrere Verfestigungseinheiten. Im Seitenschnitt der Fig. 2 sind zwei davon zu sehen. Bestandteile der einen Verfestigungseinheit 30a links in der Figur sind mit Zusatzindex "a", diejenigen der anderen Verfestigungseinheit 30b rechts in der Figur mit Zusatzindex "b" bezeichnet. Jede Verfestigungseinheit umfasst rein beispielhaft einen Laser 31a/31b, der einen Laserstrahl 32a/32b erzeugt, sowie eine Umlenkeinrichtung 33a/33b, eine Fokussiereinrichtung 34a/34b und ein Einkoppelfenster 35a/35b. Alternativ kann eine Verfestigungseinheit auch nur eines oder einen Teil der genannten Elemente umfassen.

Jeder Verfestigungseinheit ist innerhalb des Baufelds 10 ein Bearbeitungsbereich (in Fig. 2 links und rechts) zugeordnet, der durch den jeweiligen Laserstrahl 32a oder 32b gescannt werden kann. Die Bearbeitungsbereiche sind in diesem Beispiel achsensymmetrisch bezüglich einer durch einen Baufeldmittelpunkt Z0 gehenden, zum Baufeld 10 und zur Zeichnungsebene senkrechten Mittenebene angeordnet.

Die Vorrichtung 1 kann weitere, im Seitenschnitt der Fig. 2 nicht sichtbare Paare von Verfestigungseinheiten aufweisen, die vorzugsweise ähnlich wie in Fig. 2 angeordnet und/oder ausgebildet sind. Ein Beispiel einer Vier-Scanner-Maschine mit insgesamt vier Verfestigungseinheiten ist weiter unten mit Bezug auf Fig. 10a und 10b beschrieben. Weiterhin wird mit Bezug auf Fig. 11a und 11b ein Beispiel einer Sechs-Scanner-Maschine mit insgesamt sechs Verfestigungseinheiten beschrieben.

Ferner endet in Fig. 2 die Gaszufuhreinrichtung (nicht gezeigt) in einem prozesskammerseitigen Einlass 43, der beispielsweise eine Düse sein kann. Die Düse 43 ragt aus der Prozesskammerdecke 4a nicht wesentlich, hier rein beispielhaft um etwa 4 cm nach unten in die Prozesskammer 3 hinein bei etwa 49 cm Prozesskammerhöhe, die senkrecht vom Baufeld 10 bis zu einem Einkoppelfenster 35a/35b gemessen ist. Der Einlass 43 kann alternativ auch tiefer oder aber gar nicht in die Prozesskammer 3 hineinragen.

In Fig. 2 ist die Düse 43 etwa mittig zwischen den Einkoppelfenstern 35a und 35b der beiden gezeigten Verfestigungseinheiten 30a und 30b angeordnet. Da der Gasstrom 40 im Wesentlichen senkrecht nach unten zum Baufeld 10 strömt, liegt auch die Auftrefffläche A3 des Gasstroms 40 mittig im Baufeld und damit in beiden von den beiden Laserstrahlen 32a oder 32b scannbaren Bearbeitungsbereichen innerhalb des Baufelds 10. So wird jeder Bearbeitungsbereich von einem eigenen Gasstromanteil überströmt, der in Fig. 2 entweder nach links oder nach rechts vom Baufeldmittelpunkt Z0 aus fließt. Im jeweiligen Bearbeitungsbereich entstehende Verschmutzungen werden daher von den jeweiligen Gasstromanteilen auf kürzestem Wege zum Baufeldrand abtransportiert. Die beiden Laser 31a und 31b stören einander folglich gegenseitig nicht im Hinblick auf die Verschmutzungen, die sie im Herstellungsprozess durch Bestrahlung des Pulvers verursachen.

Nachfolgend werden mit Bezug auf Fig. 7 bis 11 die oben anhand der Fig. 3 bis 6 dargestellten vorteilhaften Wirkungen einer erfindungsgemäßen länglichen ovalen Auftrefffläche gemäß dem ersten Aspekt der Erfindung gegenüber den herkömmlichen kreisrunden oder länglichen rechteckigen Auftreffflächen weiter beschrieben und ergänzt.

Fig. 7 zeigt in schematischer Draufsicht ein Beispiel der Anordnung des Baufelds in der Prozesskammer einer erfindungsgemäßen Herstellvorrichtung mit Stromlinien des Gasstroms über dem Baufeld. Es kann insbesondere die Vorrichtung 1 aus Fig. 1 oder 2 sein.

In diesem Beispiel hat das Baufeld 10 einen rechteckigen Baufeldrand BR, der vorzugsweise quadratisch sein kann und beispielsweise 400mm x 400mm betragen kann. Auch die Kammerwandung 4 der Prozesskammer 3 ist hier in einem horizontalen Querschnitt in Baufeldhöhe rechteckig. Symmetrieachsen der beiden Rechtecke fallen rein beispielhaft zusammen. Um das Baufeld 10 herum ist ein beispielsweise ungefähr in Baufeldhöhe liegender Prozesskammerboden 4b zu sehen.

Um einen Mittelpunkt ZO des Baufelds 10 symmetrisch angeordnet ist die erfindungsgemäße längliche ovale Auftrefffläche A3 des Gasstroms. In diesem Beispiel ist sie elliptisch, mit einer langen Achse der Ellipse parallel zu einer Schmalseite des Baufelds B. Gestrichelt dargestellt ist eine Orthogonalprojektion der prozesskammerseitigen Öffnung eines Einlasses der Gaszufuhrleitung (beispielsweise der Düse 43 in Fig. 1 oder 2). Insbesondere durch eine auffächernde, d. h. einen Querschnitt des Gasstroms zum Baufeld hin aufweitende Wirkung des Einlasses ist die Auftrefffläche A3 größer als die Öffnungsprojektion des Einlasses aufs Baufeld 10.

Nach dem Auftreffen innerhalb der Auftrefffläche und der Umlenkung fließt der Gasstrom entlang des Baufelds 10 und des Prozesskammerbodens 4b zu den Auslässen 42a und 42b, die sich rein beispielhaft über die gesamte jeweilige Schmalseite der Kammerwandung 4 parallel zu den Schmalseiten des Baufelds erstrecken. Insbesondere erstrecken sich die Auslässe 42a und 42b hier an deren beiden Enden über die jeweilige Baufeldseite hinaus.

Durch einen Abstand D, der beispielsweise 10 bis 20 cm oder mehr betragen kann, zwischen einem Auslass 42a/42b und der nächstliegenden Schmalseite des Baufelds 10 ist eine gegebenenfalls vorhandene Saugwirkung durch den Auslass auf das Gasstromvolumen über dem Baufeld 10 relativ gering. Daher erfolgt die Umlenkung des Gasstroms nach dem Auftreffen hauptsächlich durch das Abprallen des Gasstroms an der oberen Aufbaumaterialschicht innerhalb der Auftrefffläche A3 und durch ein anschließendes Abfließen der Gasstromanteile in jeweils naheliegende Bereiche, die nicht durch den zumindest während des Verfestigens kontinuierlich nachfließenden Gasstrom beaufschlagt sind. Die Stromlinien des nach der Umlenkung zu den Auslässen 42a, 42b abfließenden Gasstromanteile sind durch durchgezogene gebogene Linien angedeutet.

Es können zusätzliche Auslässe an den Längsseiten der Kammerwandung 4, insbesondere mittig, vorgesehen sein, um das Abführen der an den "Schmalseiten" der Ellipse A3 abfließenden Gasstromanteile aus der Prozesskammer zu unterstützen.

Fig. 8 ist eine schematische seitliche Schnittdarstellung eines Beispiels für Stromlinien eines erfindungsgemäßen Gasstroms in der Prozesskammer, die Teil der Herstellvorrichtung 1 aus Figur 1 oder 2 sein kann. Der Gasstrom 40 strömt in die Prozesskammer 3 durch den Einlass 43 ein, der z. B. als eine Düse ausgebildet sein kann. Hinsichtlich der Ausgestaltung der Düse 43 können hier beispielsweise die Ausführungen zu Fig. 7 oder 9a gelten.

Die Düse 43 weist eine in Richtung senkrecht zum Baufeld 10 hin zunehmende Innenquerschnittslänge Li auf (die in der Bildebene der Fig. 8 liegt). Dadurch wird der Gasstrom 40 beim Passieren der Düse 43 in Richtung dieser Innenquerschnittslänge breiter bzw. er wird aufgefächert. Dabei bleibt aber vorzugsweise eine Innenquerschnittsfläche der Düse 43 über die Erstreckung der Düse 43 in Richtung zum Baufeld 10 hin im Wesentlichen konstant, sodass die Geschwindigkeit des Gasstroms 40 beim Passieren der Düse 43 ebenfalls im Wesentlichen unverändert bleibt.

Durch die auffächernde Wirkung der Düse 43 weicht in der Bildebene der Fig. 8 eine äußere Gasstromlinie des Gasstroms 40 sie wird durch eine durchgezogene Linie angedeutet - beispielsweise um etwa 20° von einer Lotrechten (90°) bezüglich des Baufelds 10 ab. Die Lotrechte entspricht etwa der Richtung einer ebenfalls mit durchgezogener Linie angedeuteten zentralen Gasstromlinie, die zum Mittelpunkt ZO des Baufelds 10 strömt. Je nach Gasstromdichte und/oder Absaugwirkung seitens des Auslasses kann der Verlauf der Gasstromlinien in Randbereichen des Gasstroms 40 flacher werden (in Fig. 8 durch eine gestrichelte Linie angedeutet).

Bei einer konstanten Innenquerschnittsfläche der Düse 43 über deren Erstreckung hinweg wird der Gasstrom 40 in der Düse 43 zugleich in einer zur Zeichnungsebene senkrechten Richtung gebündelt (in Fig. 8 nicht sichtbar). Dies wird nachfolgend in weiteren Beispielen anhand der Fig. 9a-9d veranschaulicht.

Mit Bezug auf Fig. 9a-9d werden im Folgenden einige Beispiele eines Einlasses der Gaszufuhreinrichtung in Form einer Düse mit auffächernder Wirkung auf den erfindungsgemäßen Gasstrom dargestellt. Die in die Düse mündende Gaszufuhrleitung (nicht gezeigt) hat dabei rein beispielhaft stets einen kreisrunden Innenquerschnitt. Ferner hat die Düse vorzugsweise auch hier, wie in Fig. 8, eine im Wesentlichen konstante Innenquerschnittsfläche für den durch die Düse fließenden Gasstrom. Die in Fig. 9a-9d dargestellten Düsen können insbesondere in der anhand von Fig. 1-8 beschriebenen Herstellvorrichtung 1 zum Einsatz kommen.

Fig. 9a zeigt schematisch in Draufsicht eine erste Ausführungsform einer solchen Düse, die beispielsweise die Düse 43 aus Fig. 2 oder 8 sein kann. Ein kreisrunder leitungsseitiger Innenquerschnitt 50 der Düse ist gestrichelt dargestellt. Ein prozesskammerseitiger Innenquerschnitt 60 (hier zugleich Öffnungsfläche) der Düse hat in dieser Ausführungsform die Form einer Ellipse, die mit der Gaszufuhrleitung konzentrisch ist. Die Öffnungsfläche 60 muss nicht zwingend elliptisch sein, vielmehr kann es ein beliebiges längliches Oval mit dargestellten zwei senkrechten Symmetrieachsen 61 und 62 sein.

Fig. 9b zeigt eine schematische Draufsicht einer zweiten Ausführungsform der Düse, die sich von derjenigen aus Fig. 9a nur dadurch unterscheidet, dass die kurze Achse der Ellipse um einen Abstand d1 von einer vertikal gezeichneten Symmetrieachse des kreisrunden Innenquerschnitts 50 parallel nach links verschoben ist. Die lange Achse a der Ellipse fällt in der Draufsicht der Fig. 9b weiterhin mit einer horizontal gezeichneten Symmetrieachse des kreisrunden Innenquerschnitts 50 zusammen.

Ein solcher Offset d1 kann zu einer vorzugsweise geringfügigen Umlenkung des Gasstroms auf seinem Weg durch die Düse genutzt werden, um eine entsprechende Verschiebung seiner Auftrefffläche innerhalb des Baufelds zu bewirken. Beispielsweise kann der Offset d1 etwa 3 mm bei einer etwa 75 mm langen Achse a der Ellipse betragen. Abweichungen von einer konzentrischen Anordnung der beiden Innenquerschnitte 50 und 60 sind dabei vorzugsweise gering, um ungünstige Verwirbelungen beim aus der Düse strömenden Gasstrom in jedem Fall zu vermeiden.

Fig. 9c und 9d zeigen eine dritte Ausführungsform eines Einlasses der Gaszufuhreinrichtung in Form einer Düse 43 mit teilweise auffächernder Wirkung auf den erfindungsgemäßen Gasstrom. Diese Düse unterscheidet sich von derjenigen aus Fig. 9b dadurch, dass ihre prozesskammerseitige Öffnungsfläche 60 sich in Richtung ihrer Längsachse 61 erheblich weiter nach einer Seite als nach der gegenüberliegenden Seite bezüglich einer Zentralachse 55 der kreisrunden Gaszufuhrleitung erstreckt. Auf diese Weise kann das erfindungsgemäße Formen des Gasstroms an spezielle, beispielsweise unsymmetrische räumliche Bedingungen in der Prozesskammer angepasst werden. Insbesondere kann die prozesskammerseitige Öffnungsfläche 60 der Düse dabei auch beliebig stark asymmetrisch entlang ihrer Längsachse 61 ausgebildet sein, während Fig. 9c-9d rein beispielhaft eine elliptische Öffnungsfläche 60 zeigen. Im Übrigen kann hier das in Bezug auf Fig. 9a und 9b Ausgeführte entsprechend gelten.

Fig. 9c zeigt schematisch zwei um 90° um die Zentralachse 55 der Zufuhrleitung relativ zueinander gedrehte Seitenansichten der Düse 43. Die linke Seitenansicht ist, wie in Fig. 8, an einer Innenquerschnittslänge Li der Düse 43 ausgerichtet, die in Richtung senkrecht zum Baufeld 10 (nicht gezeigt) hin zunimmt. Wie in Fig. 8, wird der erfindungsgemäße Gasstrom 40 (nicht gezeigt) beim Passieren der Düse 43 in Richtung der wachsenden Innenquerschnittslänge Li aufgefächert. Die rechte Seitenansicht zeigt eine Verjüngung der Düse 43 in einer hierzu senkrechten Richtung bei einer konstanten Innenquerschnittsfläche, wodurch der Gasstrom 40 gebündelt wird. Insgesamt ergibt sich dadurch prozesskammerseitig eine längliche ovale Öffnungsfläche 60 der Düse 43, die zu einer erfindungsgemäßen länglichen ovalen Auftrefffläche des Gasstroms 40 innerhalb des Baufelds 10 führt (beispielsweise wie in Fig. 7 veranschaulicht).

Ferner zeigt Fig. 9d links eine schematische prozesskammerseitige Draufsicht auf die Düse aus Fig. 9c und rechts deren schematische perspektivische Ansicht. Zur lösbaren Befestigung an der Prozesskammerdecke 4a weist die Düse 43 in Fig. 9c und 9d an ihrem Ende mit dem kreisrunden Innenquerschnitt 50 ein Außengewinde 56 auf, das die erfindungsgemäße Befestigungseinrichtung darstellt. Die Prozesskammerdecke 4a (nicht gezeigt) weist in diesem Beispiel ein komplementäres Innengewinde auf.

Bei einer nicht dargestellten vierten Ausführungsform eines Einlasses der Gaszufuhreinrichtung in Form einer Düse mit auffächernder Wirkung auf den erfindungsgemäßen Gasstrom ist die prozesskammerseitige Öffnungsfläche nicht elliptisch, sondern nur bezüglich ihrer Längsausdehnung achsensymmetrisch, im Übrigen jedoch unregelmäßig oval ausgebildet. Eine solche Düse besitzt somit nur eine Symmetrieachse (ihre Längsachse) und ist darüber hinaus nicht konzentrisch mit der in die Düse mündenden Gaszufuhrleitung. Im Übrigen gilt hier das in Bezug auf Fig. 9a-9d Ausgeführte entsprechend.

Fig. 10a zeigt einen schematischen Seitenschnitt einer Prozesskammer einer erfindungsgemäßen Herstellvorrichtung mit vier Verfestigungseinheiten, von denen im Seitenschnitt nur zwei zu sehen sind. Es kann insbesondere eine Vorrichtung 1 aus Fig. 2 sein. Jede Verfestigungseinheit 30a und 30b umfasst in diesem Beispiel einen Laser und eine Fokussieroptik, die einen Laserstrahl 32a/32b erzeugen, der einen zugehörigen Bearbeitungsbereich 10a/10b eines Baufelds 10 scannen kann.

Fig. 10b zeigt ein (rein beispielhaft) quadratisches Baufeld aus Fig. 10a in schematischer Draufsicht. Vier Bearbeitungsbereiche 10a, 10b, 10c und 10d der vier Verfestigungseinheiten sind in diesem Beispiel identische Quadranten, die das Baufeld 10 vollständig abdecken. Sie überschneiden einander jeweils an einander zugewandten Seiten. Die Überschneidungsbereiche sind schraffiert dargestellt. Zur Verdeutlichung ist eine Seite des Bearbeitungsbereichs 10c gezeigt. Eine erfindungsgemäße längliche ovale Auftrefffläche kann hier beispielsweise wie in Fig. 11b in Bezug auf Bearbeitungsbereiche 10a-10d angeordnet sein.

Fig. 11a zeigt schematisch in Draufsicht ein Beispiel einer Baufelderweiterung in einer erfindungsgemäßen Herstellvorrichtung durch das Aneinanderreihen von drei erfindungsgemäßen länglichen ovalen Auftreffflächen des Gasstroms. Im Übrigen kann in diesem Beispiel das weiter oben in Bezug auf Fig. 1-10 Ausgeführte gelten.

Rein beispielhaft sind hier drei Auftreffflächen A3 gleich ausgebildet (elliptisch, beispielsweise wie in Fig. 7) und gleich orientiert. Sie teilen auch eine gemeinsame Symmetrieachse (nicht gezeigt), die jeweils die lange Achse der Ellipse ist. Zudem stimmt diese gemeinsame Symmetrieachse auch mit der langen Symmetrieachse des rechteckigen Baufelds 10 überein. Die Auftreffflächen A3 überschneiden einander an einander zugewandten Schmalseiten der Ellipsen. Insgesamt ergibt sich dadurch ein nahezu gleichmäßiger Strömungsverlauf des auftreffenden erfindungsgemäßen Gasstroms entlang des Baufelds 10, wobei der Gasstrom nach dem Auftreffen überwiegend auf kurzer, nahezu gerader Strecke von der Auftrefffläche zum jeweiligen Auslass 42a oder 42b abfließt. Im Übrigen gilt hier das in Bezug auf Fig. 7 Ausgeführte entsprechend.

Fig. 11b zeigt schematisch in Draufsicht ein weiteres Beispiel einer Baufelderweiterung in einer erfindungsgemäßen Herstellvorrichtung. Im Unterschied zu Fig. 11a sind hier nur zwei längliche ovale Auftreffflächen des Gasstroms aneinander gereiht. Im Übrigen gilt auch in diesem Beispiel das weiter oben in Bezug auf Fig. 11a Ausgeführte entsprechend.

In Fig. 11b ist das Baufeld 10 in sechs einander teilweise überlappende Bearbeitungsbereiche 10a-10f von sechs Verfestigungseinheiten der Verfestigungseinrichtung unterteilt. Im Übrigen gilt hier das weiter oben in Bezug auf eine Vier-Scanner-Maschine anhand der Fig. 10a/10b Ausgeführte entsprechend. Rein beispielhaft sind auch hier die Bearbeitungsbereiche 10a-10f untereinander gleich, vorzugsweise sind sie jeweils quadratisch ausgebildet. Der Bearbeitungsbereich 10a ist zur Verdeutlichung durch Schraffierung hervorgehoben.

Die gemeinsame Symmetrieachse der zwei Auftreffflächen A3 verläuft in Fig. 11b im Wesentlichen mittig durch das Baufeld 10. Diese gemeinsame Symmetrieachse verläuft zentral und symmetrisch bezüglich der in der Figur links angeordneten Reihe der Bearbeitungsbereiche 10a, 10d und 10e, und der rechts angeordneten Reihe der Bearbeitungsbereiche 10b, 10c und 10f. Wie weiter oben bereits erwähnt, hat eine solche zentrale symmetrische Anordnung der Auftreffflächen bezüglich der Bearbeitungsbereiche 10a-10f unter anderem den Vorteil kurzer, nahezu gerader Strecken für den zu den Auslässen 42a/42b abfließenden Gasstrom nach seinem Auftreffen. Zudem werden so die einzelnen Bearbeitungsbereiche von jeweils verschiedenen, eigenen Gasstromanteilen überströmt, sodass Verschmutzungen über einem der Bearbeitungsbereiche nicht oder kaum zu den anderen Bearbeitungsbereichen gelangen, sodass sich die erhöhte Anzahl von Verfestigungseinheiten nicht negativ auf den Verschmutzungsabtransport über dem Baufeld auswirkt.

Bei der Baufeldeinteilung wie in Fig. 11b in einem Sechs-Scanner-Lasersintersystem kann im weiter oben erwähnten vorzugsweise geschlossenen Prozessgaskreislauf eines erfindungsgemäßen Zentralgasstroms und eines Deckengasstroms das Volumenverhältnis des Deckengasstroms zum Zentralgasstrom beispielsweise 5:1 betragen. Die resultierenden sechs Volumenteile des Prozessgases können dann beispielsweise durch jeweils drei an den beiden Längsseiten des Baufelds (insbesondere je an einem Bearbeitungsbereich) angeordnete Auslässe aus der Prozesskammer abgeführt werden.

Fig. 12a ist eine schematische seitliche Schnittdarstellung der Prozesskammer einer Herstellvorrichtung mit einem Deckengasstrom. Die Herstellvorrichtung kann insbesondere die mit Bezug auf Fig. 1-11 beschriebene Lasersintervorrichtung 1 sein. Durch in einer Prozesskammerdecke 4a angeordnete Deckeneinlässe 45 (durch durchgezogene Pfeile angedeutet) wird der Prozesskammer 3 ein Deckengasstrom 44 zugeführt (durch gestrichelte Pfeile angedeutet). Dieser sinkt vertikal in Form eines im Wesentlichen homogenen Prozessgasteppichs von der Prozesskammerdecke 4a auf den darunter liegenden Prozesskammerboden 4b, der vom Baufeld 10 und seiner Umgebung, die hier dem restlichen Bereich des Prozesskammerbodens 4b entspricht, gebildet ist. Ein Strahlengang einer Verfestigungseinrichtung, die eine oder mehrere, beispielsweise vier, Verfestigungseinheiten mit jeweils einem Laser umfassen kann, ist schematisch durch zwei durch die Prozesskammer 3 verlaufende Schenkel eines Dreiecks 32 angedeutet.

Fig. 12b ist eine schematische Draufsicht auf das Baufeld 10 und auf die Deckeneinlässe 45 in der Herstellvorrichtung aus Fig. 12a. In diesem Beispiel sind die Deckeneinlässe 45 zur Erzeugung eines im Wesentlichen homogenen Deckengasstroms 44 im Wesentlichen gleichmäßig über einen gesamten Bereich der Prozesskammerdecke 4a verteilt, mit Ausnahme eines von einer Einkoppeloptik (beispielsweise Einkoppelfenster, nicht gezeigt) für die Verfestigungsstrahlung eingenommenen Bereichs.

Fig. 13 ist eine schematische seitliche Schnittdarstellung einer erfindungsgemäßen Herstellvorrichtung, in der ein Zentralgasstrom mit einem Deckengasstrom in einem geschlossenen Prozessgaskreislauf kombiniert ist. Die Herstellvorrichtung kann beispielsweise in Bezug auf Fig. 1-12 dargestellte Eigenschaften besitzen, die Prozesskammer 3 kann insbesondere ähnlich zu derjenigen aus Fig. 12a/12b gestaltet sein.

Zuleitungen 46a und Ableitungen 46b des Prozessgaskreislaufs umfassen eine Fördereinheit 47, die in diesem Beispiel eine Turbine und zusätzlich einen Filter in einem Umluft-Filtergerät vereint. Der Filter dient zur Entfernung von Verschmutzungen aus dem aus der Prozesskammer 3 abgeführten Prozessgas.

In einer geregelten oder ungeregelten Aufteilungseinheit 48 wird ein der Prozesskammer 3 über Deckeneinlässe 45 zugeführtes Prozessgas in einen Deckengasstrom 44 und einen Zentralgasstrom 40 (beispielsweise gemäß dem ersten Aspekt der Erfindung) aufgeteilt. Diese Aufteilung wird je nach Anforderungen der konkreten Anwendung unter Verwendung in diversen Zuleitungszweigen angeordneter Messstellen 51 überwacht und/oder geregelt. Die Messstellen können beispielsweise den jeweiligen Prozessgasstrom erfassen. Die Regelung kann beispielsweise in Abhängigkeit von der baulichen Ausgestaltung der Prozesskammer 3 und/oder von einem konkreten Fertigungsprozess erfolgen.

Fig. 14 ist eine schematische seitliche Schnittdarstellung einer Herstellvorrichtung, in der ein Seitengasstrom mit einem Deckengasstrom in einem geschlossenen Prozessgaskreislauf kombiniert ist. Die Vorrichtung in Fig. 14 unterscheidet sich von derjenigen aus Fig. 13 nur dadurch, dass anstelle des Zentralgasstroms 40 ein Seitengasstrom 49 der Prozesskammer 3 zugeführt wird. Der Seitengasstrom 49 fließt im Wesentlichen parallel und vorzugsweise laminar über dem Baufeld 10. Er wird der Prozesskammer 3 über einen an einer Baufeldseite angeordneten Seiteneinlass der Zuleitung 46a zugeführt und über einen an einer gegenüber liegenden Baufeldseite angeordneten Auslass der Ableitung 46b aus der Prozesskammer abgeführt.

Fig. 15 ist eine schematische perspektivische Ansicht eines Lochblechs zur Erzeugung eines Deckengasstroms in einer Prozesskammer, deren Decke hierzu einen Hohlraum aufweist (nicht dargestellt). Mit anderen Worten ist das Lochblech 52 in Fig. 15 ein Beispiel eines Innenwandbereichs eines solchen Hohlraums. In diesem Beispiel hat das Lochblech 52 eine Vielzahl von Löchern 53, die Deckeneinlässe darstellen.

Das Lochblech 52 weist ferner eine größere Innenöffnung 54 in seinem mittleren Bereich auf, die in einem eingebauten Zustand des Lochblechs 52 in der Prozesskammerdecke 4a u. a. Einkoppelfenster 35a, 35b für die Einkoppelung der Verfestigungsstrahlung in die Prozesskammer 3 umgibt. In der dargestellten vorteilhaften Ausgestaltung hat das Lochblech 52 insgesamt eine Anzahl von etwa 2000 Löchern 53, die über das Lochblech 52 im Wesentlichen - insbesondere mit Ausnahme der Innenöffnung 54 sowie zweier annähernd sechseckiger Flächen 71, die als Prallflächen zur Umlenkung von Gasströmen dienen, welche in den nicht dargestellten Hohlraum der Prozesskammerdecke 4a führen, und somit für eine gleiche oder annähernd gleiche Geschwindigkeit der Teilströme der Deckengasstroms sorgen - gleichmäßig verteilt sind, weil sie gleich groß sind und durchschnittlich in regelmäßigen Abständen voneinander angeordnet sind. Dabei besitzen die Löcher 53 hier einen Durchmesser von etwa 2,5 mm. Das Verhältnis einer durch Löcher 53 gelochten Fläche zu einer gesamten Prozesskammerdeckenfläche beträgt dabei etwa 3,8 %.

Figur 16 zeigt das Lochblech 52 aus Fig. 15 in einem eingebauten Zustand in der Decke 4a einer Prozesskammer 3 in einer schematischen perspektivischen Ansicht schräg von unten. Innerhalb der Innenöffnung 54 sind in diesem Beispiel vier Einkoppelfenster 35a, 35b, 35c und 35d einer Vier-Scanner-Maschine, die insbesondere eine Vorrichtung wie in Fig. 2 sein kann, in der Prozesskammerdecke 4a angeordnet. Mittig zwischen den Einkoppelfenstern 35a, 35b, 35c und 35d ist eine Düse 43 angeordnet, durch die der erfindungsgemäße Zentralgasstrom 40 (nicht gezeigt) in die Prozesskammer 3 einströmen kann.

Figur 17 zeigt eine Prozesskammer 3, teilweise in einem vertikalen Querschnitt, in einer schematischen perspektivischen Ansicht schräg von oben, mit einem in deren Decke 4a eingebauten Lochblech 52, wie in Figuren 15 und 16. Insbesondere kann es sich dabei um eine Prozesskammer 3 der in Fig. 2 dargestellten Vier-Scanner-Maschine 1 handeln. Eine Gaszufuhrleitung bzw. Zuleitung 46a mündet in einen zentralen Gaseinlass, hier in Form einer Düse 43, die die erfindungsgemäße Gaszufuhreinrichtung nach dem ersten Aspekt der Erfindung darstellt. Die Prozesskammerdecke 4a liegt oberhalb eines Baufelds 10 und umfasst einen Hohlraum 73 mit einer Wandung. Diese Hohlraumwandung umfasst einen von der Prozesskammer 3 abgewandten Außenwandbereich 74 und einen an die Prozesskammer 3 angrenzenden Innenwandbereich, der durch das Lochblech bzw. die Lochplatte 52 gebildet ist. In einem vertikalen Wandabschnitt der Prozesskammerwand setzt unmittelbar oberhalb des Prozesskammerbodens 4b bzw. einer Ebene des Baufelds 10 ein Auslass 42a oder 42b an, der zwei horizontal verlaufende Öffnungsschlitze aufweist. Der Auslass 42a oder 42b erstreckt sich in einem Abstand von einem Rand des Baufelds 10 und parallel zu einer Seite des Baufelds 10 und dehnt sich in diesem Ausführungsbeispiel seiner Länge nach über die parallel verlaufende Seitenlänge des Baufelds 10 hinaus aus, sodass ein Abtransport von Verschmutzungen in Bereichen über dem Prozesskammerboden 4b, die nicht über dem Baufeld 10 liegen, verbessert wird.

Figuren 15 bis 17 zeigen, dass eine Prozesskammerdecke 4a nicht zwingend über ihre gesamte Fläche hinweg plan ausgebildet sein und/oder parallel zum Baufeld 10 liegen muss. Die hier gezeigte Prozesskammerdecke 4a ist vertikal über dem Baufeld 10 im Wesentlichen eben und liegt parallel zu ihm, weist aber über einem Bereich des Baufeldrands einen schräg vom Prozesskammerboden weg aufsteigenden Abschnitt 72 auf. Dieser Abschnitt 72 beeinträchtigt die Funktionsweise des Deckengasstroms nicht, sondern ist wie der gesamte Einlassbereich der Prozesskammerdecke 4a so ausgebildet, dass sich im Betrieb ein homogener Deckengasstrom im Wesentlichen senkrecht zum Baufeld 10 aus den Öffnungen 53 in die Prozesskammer 3 ergießt. Dies wird ermöglicht durch eine definierte Steuerung eines Prozessgasvolumens, welches aus den in diesem Beispiel zwei Zuführleitungen (in Fig. 17 nicht zu sehen, in Fig. 16 oberhalb der sechseckigen Flächen 71 angeordnet) in den Hohlraum 73 der Prozesskammerdecke 4a hineingepumpt wird, relativ zu einem Prozessgasvolumen, das den Hohlraum 73 durch die Löcher 53 der Lochplatte 52 in Richtung der Prozesskammer 3 verlässt. Durch geeignete Festlegung von Parametern, wie z. B. ein Volumenstrom des Gasstroms in den Hohlraum 73 und/oder ein Verhältnis der Flächen der Öffnungsquerschnitte an Ein- und Auslässen des Hohlraums 73, kann im Betrieb ein Überdruck, vorzugsweise im gesamten Bereich des Hohlraums 73, relativ zum Umgebungsdruck in der Prozesskammer 3 erzeugt werden, der für eine weitgehend gleiche Geschwindigkeit der Teilströme des Gasstroms, die durch die Löcher 53 in die Prozesskammer 3 strömen, sorgt. Mit anderen Worten strömt ein in den Hohlraum 73 eingeführtes Gasvolumen nicht auf kürzestem Wege durch nah an den Zuführleitungen liegende Löcher 53 der Lochplatte 52 weiter in die Prozesskammer 3, sondern flutet zunächst kontinuierlich den Hohlraum 73, sodass nach einer kurzen Anlaufphase im Wesentlichen im gesamten Hohlraum 73 bzw. im Wesentlichen an allen Öffnungen 53 des Innenwandbereichs 52 hin zur Prozesskammer 3 ein im Wesentlichen gleicher Druck, d. h. relativ zum Prozesskammerdruck ein Überdruck, herrscht. Ein derartiger Überdruck kann, z. B. bei dem hier vorliegenden Ausführungsbeispiel einer Prozesskammerdecke 4a mit einer hohen Anzahl von Öffnungen 53 gleicher Form und gleicher Öffnungsfläche, einen homogenen Deckengasstrom durch die Öffnungen 53 der Innenwand/Lochplatte 52 der Prozesskammerdecke 4a bewirken. Die Teilströme des Deckengasstroms weisen in diesem Fall im Wesentlichen gleiche Geschwindigkeiten und einen im Wesentlichen gleichen Volumenstrom auf.

Ein Einflussfaktor bei einer angestrebten Homogenisierung des Deckengasstroms kann eine Lochgröße, d. h. eine Fläche und/oder Form eines Öffnungsquerschnitts der Löcher 53 im Innenwandbereich 52 sein. Bei konstantem Volumenstrom eines Prozessgases, das in den Hohlraum 73 eingeführt wird, kann z. B. durch einen Austausch des Innenwandbereichs 52 der Prozesskammerdecke 4a, etwa gegen eine Lochplatte mit unregelmäßiger Anordnung der Löcher, eine Ausprägung des Deckengasstroms gezielt mit konstruktiv einfachen Mitteln verändert werden. Teilströme des Deckengasstroms, die aus der beschriebenen, schräg zum Baufeld 10 stehenden Fläche 72 der Prozesskammerdecke 4a zunächst in entsprechend spitzem Winkel zum Baufeld 10 die Löcher 53 durchqueren, können bedingt durch weitere Effekte, z. B. Sogeffekte anderer Bereiche des Deckengasstroms oder eine Ablenkung durch einen angrenzenden vertikalen Bereich der Prozesskammerwand, auf ihrem Weg zum Baufeld 10 allmählich wieder in eine annähernd senkrechte Richtung zum Baufeld 10 geführt werden, wodurch in einem unteren Bereich, z. B. einer unteren Hälfte, der Prozesskammer 3 wieder ein im Wesentlichen senkrecht zum Baufeld 10 gerichteter Deckengasstrom hergestellt wird.

Auch wenn die vorliegende Erfindung anhand einer Lasersinter- oder Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objekts durch schichtweises Aufbringen und selektives Verfestigen eines Aufbaumaterials (vorzugsweise in Pulverform) angewendet werden, unabhängig von der Art und Weise, wie das Aufbaumaterial verfestigt wird. Das selektive Verfestigen des aufgebrachten Aufbaumaterials kann durch eine Energiezufuhr jeder geeigneten Art erfolgen. Alternativ oder zusätzlich kann es beispielsweise auch durch 3D-Drucken, etwa durch Aufbringen eines Klebers, durchgeführt werden.

Beim selektiven Verfestigen durch Energiezufuhr kann Energie dem Aufbaumaterial im Allgemeinen beispielsweise durch elektromagnetische Strahlung oder Teilchenstrahlung zugeführt werden. Dabei wirkt die Strahlung so auf das Aufbaumaterial im jeweiligen zu verfestigenden Bereich einer Schicht ein, dass es seinen Aggregatzustand ändert, einen Phasenübergang oder eine andere Strukturänderung durchläuft und nach einem anschließenden Abkühlvorgang in verfestigter Form vorliegt. Vorzugsweise ist das Aufbaumaterial ein Pulver, wobei die Strahlung insbesondere eine Laserstrahlung sein kann. In diesem Fall wirkt die Strahlung so auf einen zu verfestigenden Bereich der jeweiligen Schicht ein, dass Pulverkörner des Aufbaumaterials in diesem Bereich durch die durch die Strahlung eingebrachte Energie teilweise oder vollständig aufgeschmolzen werden und nach einer Abkühlung miteinander verbunden als Festkörper vorliegen.

Eine Verfestigungseinrichtung zur selektiven Verfestigung durch Energiezufuhr kann beispielsweise einen oder mehrere Gas- oder Festkörperlaser oder jede andere Art von Laser wie z. B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann zur selektiven Verfestigung jede Einrichtung verwendet werden, mit der Energie als Strahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das selektive Verfestigen mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HHS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann nicht selektiv großflächig oder mit einem verfahrbaren Zeilenbelichter belichtet wird, kann die Erfindung angewendet werden.

Bei der vorliegenden Erfindung können grundsätzlich alle Arten von Aufbaumaterial zum Einsatz kommen, die sich für die generative Fertigung eignen, insbesondere Kunststoffe, Metalle, Keramiken, jeweils vorzugsweise in Pulverform, Sand, gefüllte oder gemischte Pulver.

## Patentansprüche

1. Verfahren zum generativen Herstellen eines dreidimensionalen Objekts (2) in einer Prozesskammer (3) einer generativen Herstellvorrichtung (1) durch schichtweises Aufbringen und selektives Verfestigen eines Aufbaumaterials (13) innerhalb eines in der Prozesskammer angeordneten Baufelds (10),
wobei während der Herstellung des Objekts ein Prozessgas mittels einer Gaszufuhreinrichtung (43) der Prozesskammer zugeführt wird und über einen Auslass (42a, 42b) aus der Prozesskammer abgeführt wird,
wobei die Gaszufuhreinrichtung (43) so ausgebildet und/oder relativ zum Baufeld angeordnet ist und/oder angesteuert wird, dass ein durch die Prozesskammer strömender Gasstrom (40) des Prozessgases derart geformt wird, dass eine im Wesentlichen längliche ovale Auftrefffläche (A3) des Gasstroms (40) innerhalb des Baufelds (10) erzeugt wird, **dadurch gekennzeichnet, dass** der Gasstrom (40) mittels eines Einlasses (43) der Gaszufuhreinrichtung (43) geformt wird, der prozesskammerseitig eine längliche ovale Öffnungsfläche (60) umfasst.

2. Verfahren nach Anspruch 1,
wobei die längliche ovale Auftrefffläche (A3) im Wesentlichen achsensymmetrisch bezüglich einer ersten Symmetrieachse ist und vorzugsweise zusätzlich im Wesentlichen achsensymmetrisch bezüglich einer zweiten Symmetrieachse ist, die senkrecht auf die erste Symmetrieachse steht.

3. Verfahren nach Anspruch 1 oder 2,
wobei zumindest ein Teil des Gasstroms (40) über mindestens 60%, vorzugsweise mindestens 75%, besonders bevorzugt mindestens 90% einer ersten Prozesskammerhöhe ungeführt in einer kontrollierten Weise strömt,
wobei die erste Prozesskammerhöhe ein Abstand zwischen dem Baufeld (10) und einer Prozesskammerdecke (4a), in der die Gaszufuhreinrichtung (43) angeordnet ist, in einer zum Baufeld senkrechten Richtung ist.

4. Verfahren nach einem der vorangehenden Ansprüche,
wobei die längliche ovale Öffnungsfläche (60) des Einlasses (43) im Wesentlichen achsensymmetrisch bezüglich einer dritten Symmetrieachse ist und vorzugsweise zusätzlich im Wesentlichen achsensymmetrisch bezüglich einer vierten Symmetrieachse ist, die senkrecht auf die dritte Symmetrieachse steht,
wobei die dritte oder die vierte Symmetrieachse entlang einer Längsausdehnung der Öffnungsfläche (60) des Einlasses (43) parallel zu einer Längsachse der länglichen ovalen Auftrefffläche (A3) ist und vorzugsweise in einer Orthogonalprojektion auf das Baufeld (10) mit der ersten oder der zweiten Symmetrieachse der Auftrefffläche (A3) zusammenfällt.

5. Verfahren nach einem der Ansprüche 1 bis 4,
wobei die Öffnungsfläche (60) des Einlasses (43) im Wesentlichen, vorzugsweise vollständig dem Baufeld (10) zugewandt ist und/oder
der Einlass (43) in einer Prozesskammerdecke (4a) angeordnet ist und vorzugsweise nicht oder nicht wesentlich in die Prozesskammer (3) hineinragt.

6. Verfahren nach einem der Ansprüche 1 bis 5,
wobei der Gasstrom (40) geformt wird, indem eine Innenquerschnittsfläche des Einlasses (43) über seine Erstreckung in einer zum Baufeld (10) senkrechten Richtung zum Baufeld (10) hin nicht größer wird, vorzugsweise im Wesentlichen konstant bleibt und besonders bevorzugt eine Innenquerschnittsfläche des Einlasses (43) an seiner prozesskammerseitigen Öffnung (60) mindestens 80% einer Innenquerschnittsfläche einer am Einlass (43) anschließenden Gaszufuhrleitung beträgt.

7. Verfahren nach einem der Ansprüche 1 bis 6,
wobei der Auslass (42a, 42b) mindestens eine, vorzugsweise zwei an gegenüberliegenden Seiten des Baufelds (10) angeordnete, längliche Öffnung(en) aufweist, die sich im Wesentlichen parallel zu einer Längsachse der Öffnungsfläche (60) des Einlasses (43) erstreckt/erstrecken.

8. Verfahren nach einem der vorangehenden Ansprüche,
wobei die im Wesentlichen längliche ovale Auftrefffläche (A3) innerhalb eines Zentralbereichs des Baufelds (10) liegt, der höchstens 60%, vorzugsweise höchstens 20%, besonders bevorzugt höchstens 10% einer Gesamtfläche des Baufelds (10) einnimmt.

9. Verfahren nach einem der vorangehenden Ansprüche,
wobei die Gaszufuhreinrichtung (43) so ausgebildet und/oder relativ zum Baufeld (10) angeordnet ist und/oder angesteuert wird, dass der Gasstrom (40) derart geformt wird, dass mehrere längliche ovale Auftreffflächen (A3) von Teilströmen des Gasstroms (40) innerhalb des Baufelds (10) erzeugt werden,
wobei die mehreren länglichen ovalen Auftreffflächen (A3) der Teilströme in ihrer Längsausdehnung im Wesentlichen gleich orientiert sind und vorzugsweise eine Symmetrieachse teilen, bezüglich welcher jede der mehreren Auftreffflächen achsensymmetrisch ist,
wobei besonders bevorzugt die gemeinsame Symmetrieachse der Auftreffflächen mit einer Symmetrieachse des Baufelds (10) übereinstimmt.

10. Verfahren nach einem der vorangehenden Ansprüche,
wobei der Gasstrom (40) innerhalb eines Zentralbereichs des Baufelds (10) im Wesentlichen rechtwinklig zum Baufeld, insbesondere unter mindestens 45°, vorzugsweise unter mindestens 60°, besonders bevorzugt unter mindestens 70°, auftrifft,
wobei der Zentralbereich höchstens 60%, vorzugsweise höchstens 20%, besonders bevorzugt höchstens 10% einer Gesamtfläche des Baufelds einnimmt.

11. Verfahren nach einem der vorangehenden Ansprüche,
wobei der Gasstrom (40) nach dem Auftreffen innerhalb des Baufelds (10) im Wesentlichen parallel zum Baufeld zu einem Rand (BR) des Baufelds hin fließt,
wobei eine Umlenkung des innerhalb des Baufelds (10) auftreffenden Gasstroms (40) in eine im Wesentlichen parallele Flussrichtung zum Rand (BR) des Baufelds hin in einem unteren Viertel, vorzugsweise einem unteren Sechstel, besonders bevorzugt einem unteren Achtel einer zweiten Prozesskammerhöhe stattfindet,
wobei die zweite Prozesskammerhöhe ein Abstand zwischen dem Baufeld und der Gaszufuhreinrichtung (43) in einer zum Baufeld senkrechten Richtung ist.

12. Verfahren nach einem der vorangehenden Ansprüche,
wobei das selektive Verfestigen mittels einer Verfestigungseinrichtung (30) durchgeführt wird, die mindestens zwei Verfestigungseinheiten (30a, 30b) umfasst,
wobei jeder Verfestigungseinheit ein Bearbeitungsbereich (10a-10f) innerhalb des Baufelds (10) zugeordnet ist,
und wobei die Bearbeitungsbereiche (10a-10f) vorzugsweise symmetrisch bezüglich einer zum Baufeld (10) senkrechten Mittenebene oder Mittenachse, die durch einen Mittelpunkt (Z0) des Baufelds geht, angeordnet sind.

13. Verfahren nach einem der vorangehenden Ansprüche,
wobei die Gaszufuhreinrichtung (43) mindestens eine Befestigungseinrichtung (56) zum lösbaren Befestigen mindestens einer Düse (43) zur Formung des Gasstroms (40) umfasst und im Voraus die mindestens eine Düse (43) aus einer größeren Menge mittels der Befestigungseinrichtung (56) befestigbarer Düsen ausgewählt und mittels der Befestigungsvorrichtung befestigt wird,
wobei durch das Auswählen der mindestens einen Düse (43) eine Strömungsrichtung und/oder ein Strömungsprofil des Gasstroms (40) in der Prozesskammer (3) geändert wird.

14. Steuereinheit (39) für eine Vorrichtung (1) zum generativen Herstellen eines dreidimensionalen Objekts (2), wobei die Steuereinheit zur Generierung von Steuerbefehlen zur vorzugsweise automatisierten Durchführung eines Verfahrens gemäß einem der Ansprüche 1 bis 13 ausgebildet ist.

15. Vorrichtung (1) zum generativen Herstellen eines dreidimensionalen Objekts (2), die zu einer vorzugsweise automatisierten Durchführung eines Verfahrens gemäß einem der Ansprüche 1 bis 13 ausgebildet ist und/oder angesteuert wird,
wobei die Vorrichtung (1) umfasst:
eine Prozesskammer (3) zum Herstellen des Objekts (2) durch schichtweises Aufbringen und selektives Verfestigen eines Aufbaumaterials (13) innerhalb eines in der Prozesskammer angeordneten Baufelds (10),
eine Gaszufuhreinrichtung (43) zum Zuführen eines Prozessgases der Prozesskammer während der Herstellung des Objekts und
einen Auslass (42a, 42b) zum Abführen des Prozessgases aus der Prozesskammer,
wobei die Gaszufuhreinrichtung (43) so ausgebildet und/oder relativ zum Baufeld (10) angeordnet ist und/oder angesteuert wird, dass ein durch die Prozesskammer fließender Gasstrom (40) des Prozessgases derart geformt wird, dass mindestens eine im Wesentlichen längliche ovale Auftrefffläche (A3) des Gasstroms (40) innerhalb des Baufelds (A3) erzeugt wird,
**dadurch gekennzeichnet, dass** der Gasstrom (40) mittels eines Einlasses (43) der Gaszufuhreinrichtung (43) geformt wird, der prozesskammerseitig eine längliche ovale Öffnungsfläche (60) umfasst.

## Claims

1. A method of generatively manufacturing a three-dimensional object (2) in a process chamber (3) of a generative manufacturing apparatus (1) by a layer-by-layer application and selective solidification of a building material (13) within a build area (10) arranged in the process chamber,
wherein, while the object is being manufactured, a process gas is supplied to the process chamber by means of a gas supply device (43) and is discharged from the process chamber via an outlet (42a, 42b),
wherein the gas supply device (43) is designed and/or arranged relatively to the build area and/or controlled such that a gas stream (40) of the process gas streaming through the process chamber is shaped in such a manner that a substantially elongate oval impingement area (A3) of the gas stream (40) is generated within the build area (10), **characterized in that** the gas stream (40) is shaped by means of an inlet (43) of the gas supply device (43) which inlet comprises a process-chamber-sided elongate oval opening area (60).

2. The method of claim 1,
wherein the elongate oval impingement area (A3) is substantially axially symmetrical with respect to a first axis of symmetry and preferably additionally substantially axially symmetrical with respect to a second axis of symmetry which is perpendicular to the first axis of symmetry.

3. The method of claim 1 or 2,
wherein at least a portion of the gas stream (40) streams over at least 60%, preferably at least 75%, particularly preferably at least 90% of a first process chamber height in a controlled manner without being guided,
wherein the first process chamber height is a distance between the build area (10) and a process chamber ceiling (4a) in which the gas supply device (43) is arranged, which distance is in a vertical direction to the build area.

4. The method according to any one of the preceding claims,
wherein the elongate oval opening area (60) of the inlet (43) is substantially axially symmetrical with respect to a third axis of symmetry and preferably additionally substantially axially symmetrical with respect to a fourth axis of symmetry which is perpendicular to the third axis of symmetry,
wherein the third or fourth axis of symmetry along a longitudinal extension of the opening area (60) of the inlet (43) is parallel to a longitudinal axis of the elongate oval impingement area (A3) and preferably coincides with the first or second axis of symmetry of the impingement area (A3) in an orthogonal projection onto the build area (10).

5. The method according to one of claims 1 to 4,
wherein the opening area (60) of the inlet (43) is substantially, preferably entirely facing the build area (10) and/or
the inlet (43) is arranged in a process chamber ceiling (4a) and preferably does not or does not substantially protrude into the process chamber (3).

6. The method according to one of claims 1 to 5,
wherein the gas stream (40) is shaped in that an inner cross-sectional area of the inlet (43) does not increase over its extension in a direction vertical to the build area (10) towards the build area (10), preferably remains substantially constant, and particularly preferably an inner cross-sectional area of the inlet (43) at its process-chamber-sided opening (60) is at least 80% of an inner cross-sectional area of a gas supply pipe connecting to the inlet (43).

7. The method according to one of claims 1 to 6,
wherein the outlet (42a, 42b) comprises at least one, preferably two elongate opening(s) arranged at opposite sides of the build area (10) which opening(s) extend(s) substantially parallel to a longitudinal axis of the opening area (60) of the inlet (43).

8. The method according to any one of the preceding claims,
wherein the substantially elongate oval impingement area (A3) lies within a central region of the build area (10) which central region covers no more than 60%, preferably no more than 20%, particularly preferably no more than 10% of a total area of the build area (10).

9. The method according to any one of the preceding claims,
wherein the gas supply device (43) is designed and/or arranged relatively to the build area (10) and/or controlled such that the gas stream (40) is shaped in such a manner that several elongate oval impingement areas (A3) of partial streams of the gas stream (40) are generated within the build area (10),
wherein the several elongate oval impingement areas (A3) of the partial streams have substantially the same orientation regarding their longitudinal extension and preferably possess a common axis of symmetry with respect to which each of the several impingement areas is axially symmetrical,
wherein particularly preferably the common axis of symmetry of the impingement areas coincides with an axis of symmetry of the build area (10).

10. The method according to any one of the preceding claims,
wherein the gas stream (40) impinges within a central region of the build area (10) substantially at a right angle to the build area, in particular at an angle of at least 45°, preferably at an angle of at least 60°, particularly preferably at an angle of at least 70°,
wherein the central region covers no more than 60%, preferably no more than 20%, particularly preferably no more than 10% of a total area of the build area.

11. The method according to any one of the preceding claims,
wherein, after impinging within the build area (10), the gas stream (40) flows substantially parallel to the build area towards an edge (BR) of the build area,
wherein a deflection of the gas stream (40) impinging within the build area (10) to a substantially parallel flow direction towards the edge (BR) of the build area takes place in a lower quarter, preferably a lower sixth, particularly preferably a lower eighth of a second process chamber height,
wherein the second process chamber height is a distance between the build area and the gas supply device (43) in a direction perpendicular to the build area.

12. The method according to any one of the preceding claims,
wherein the selective solidification is performed by means of a solidification device (30) comprising at least two solidification units (30a, 30b),
wherein a working area (10a-10f) within the build area (10) is assigned to each solidification unit,
and wherein the working areas (10a-10f) are preferably symmetrically arranged with respect to a central plane or central axis going through a central point (Z0) of the build area perpendicularly to the build area (10).

13. The method according to any one of the preceding claims,
wherein the gas supply device (43) comprises at least one fastening device (56) for detachably fastening at least one nozzle (43) for shaping the gas stream (40) and the at least one nozzle (43) is selected in advance from a greater quantity of nozzles which can be fastened by means of the fastening device (56) and the at least one nozzle is fastened by means of the fastening device,
wherein, by selecting the at least one nozzle (43), a flow direction and/or a flow profile of the gas stream (40) in the process chamber (3) is changed.

14. A control unit (39) for an apparatus (1) for generatively manufacturing a three-dimensional object (2), wherein the control unit is configured to generate control commands for the preferably automatic execution of a method according to any one of claims 1 to 13.

15. An apparatus (1) for generatively manufacturing a three-dimensional object (2), the apparatus being designed and/or controlled to preferably automatically execute a method according to any one of claims 1 to 13,
wherein the apparatus (1) comprises:
a process chamber (3) for manufacturing the object (2) by a layer-by-layer application and selective solidification of a building material (13) within a build area (10) arranged in the process chamber,
a gas supply device (43) for supplying a process gas to the process chamber during the manufacturing of the object, and
an outlet (42a, 42b) for discharging the process gas from the process chamber,
wherein the gas supply device (43) is designed and/or arranged relatively to the build area (10) and/or controlled such that a gas stream (40) of the process gas streaming through the process chamber is shaped in such a manner that at least one substantially elongate oval impingement area (A3) of the gas stream (40) is generated within the build area, **characterized in that** the gas stream (40) is shaped by means of an inlet (43) of the gas supply device (43) which inlet comprises a process-chamber-sided elongate oval opening area (60).

## Revendications

1. Procédé pour la fabrication additive d'un objet tridimensionnel (2) dans une chambre de traitement (3) d'un dispositif de fabrication additive (1) par application couche par couche et solidification sélective d'un matériau de construction (13) à l'intérieur d'un champ de construction (10) disposé dans la chambre de traitement,
dans lequel, pendant la fabrication de l'objet, un gaz de traitement est amené à la chambre de traitement au moyen d'un dispositif d'amenée de gaz (43) et est évacué de la chambre de traitement par une sortie (42a, 42b),
dans lequel le dispositif d'amenée de gaz (43) est réalisé et/ou disposé par rapport au champ de construction et/ou commandé de sorte qu'un courant de gaz (40), s'écoulant à travers la chambre de traitement, du gaz de traitement est formé de telle sorte qu'une surface d'impact (A3) sensiblement ovale allongée du courant de gaz (40) est produite à l'intérieur du champ de construction (10),
**caractérisé en ce que**
le courant de gaz (40) est formé au moyen d'une entrée (43) du dispositif d'amenée de gaz (43) qui comprend côté chambre de traitement une surface d'ouverture (60) ovale allongée.

2. Procédé selon la revendication 1,
dans lequel la surface d'impact (A3) ovale allongée est sensiblement à symétrie axiale par rapport à un premier axe de symétrie et de préférence en plus sensiblement à symétrie axiale par rapport à un deuxième axe de symétrie qui est perpendiculaire au premier axe de symétrie.

3. Procédé selon la revendication 1 ou 2,
dans lequel au moins une partie du courant de gaz (40) s'écoule de façon non guidée d'une manière contrôlée sur au moins 60 %, de préférence au moins 75 %, de manière particulièrement préférée au moins 90 % d'une première hauteur de chambre de traitement,
dans lequel la première hauteur de chambre de traitement est un écart entre le champ de construction (10) et un plafond de chambre de traitement (4a), dans lequel le dispositif d'amenée de gaz (43) est disposé, dans une direction perpendiculaire au champ de construction.

4. Procédé selon l'une quelconque des revendications précédentes,
dans lequel la surface d'ouverture (60) ovale allongée de l'entrée (43) est sensiblement à symétrie axiale par rapport à un troisième axe de symétrie et de préférence en plus sensiblement à symétrie axiale par rapport à un quatrième axe de symétrie qui est perpendiculaire au troisième axe de symétrie,
dans lequel le troisième ou le quatrième axe de symétrie le long d'une étendue longitudinale de la surface d'ouverture (60) de l'entrée (43) est parallèle à un axe longitudinal de la surface d'impact (A3) ovale allongée et, de préférence, dans une projection orthogonale sur le champ de construction (10), coïncide avec le premier ou le deuxième axe de symétrie de la surface d'impact (A3).

5. Procédé selon l'une quelconque des revendications 1 à 4,
dans lequel la surface d'ouverture (60) de l'entrée (43) est tournée sensiblement, de préférence entièrement, vers le champ de construction (10) et/ou
l'entrée (43) est disposée dans un plafond de chambre de traitement (4a) et de préférence ne fait pas ou ne fait pas sensiblement saillie dans la chambre de traitement (3).

6. Procédé selon l'une quelconque des revendications 1 à 5,
dans lequel le courant de gaz (40) est formé du fait qu'une surface de section transversale intérieure de l'entrée (43) sur son étendue dans une direction perpendiculaire au champ de construction (10) en direction du champ de construction (10) n'est pas plus grande, de préférence reste sensiblement constante et de manière particulièrement préférée une surface de section transversale intérieure de l'entrée (43) atteint sur son ouverture (60) côté chambre de traitement au moins 80 % d'une surface de section transversale intérieure d'une conduite d'amenée de gaz se raccordant à l'entrée (43).

7. Procédé selon l'une quelconque des revendications 1 à 6,
dans lequel la sortie (42a, 42b) présente au moins une, de préférence deux ouverture(s) allongée(s) disposée(s) sur les faces opposées du champ de construction (10), qui s'étend/s'étendent sensiblement parallèlement à un axe longitudinal de la surface d'ouverture (60) de l'entrée (43).

8. Procédé selon l'une quelconque des revendications précédentes,
dans lequel la surface d'impact (A3) sensiblement ovale allongée se situe à l'intérieur d'une zone centrale du champ de construction (10), qui occupe au maximum 60 %, de préférence au maximum 20 %, de manière particulièrement préférée au maximum 10 % d'une surface totale du champ de construction (10).

9. Procédé selon l'une quelconque des revendications précédentes,
dans lequel le dispositif d'amenée de gaz (43) est réalisé et/ou disposé par rapport au champ de construction (10) et/ou commandé de sorte que le courant de gaz (40) est formé de telle sorte que plusieurs surfaces d'impact (A3) ovales allongées de courants partiels du courant de gaz (40) sont produites à l'intérieur du champ de construction (10),
dans lequel les différentes surfaces d'impact (A3) ovales allongées des courants partiels sont orientées de manière sensiblement identique dans leur étendue longitudinale et de préférence divisent un axe de symétrie par rapport auquel chacune des différentes surfaces d'impact est à symétrie axiale,
dans lequel de manière particulièrement préférée l'axe de symétrie commun des surfaces d'impact coïncide avec un axe de symétrie du champ de construction (10).

10. Procédé selon l'une quelconque des revendications précédentes,
dans lequel le courant de gaz (40) vient frapper l'intérieur d'une zone centrale du champ de construction (10) sensiblement à angle droit par rapport au champ de construction, en particulier selon au moins 45°, de préférence au moins 60°, de manière particulièrement préférée au moins 70°,
dans lequel la zone centrale occupe au maximum 60 %, de préférence au maximum 20 %, de manière particulièrement préférée au maximum 10 % d'une surface totale du champ de construction.

11. Procédé selon l'une quelconque des revendications précédentes,
dans lequel le courant de gaz (40), après être venu frapper l'intérieur du champ de construction (10), circule sensiblement parallèlement au champ de construction en direction d'un bord (BR) du champ de construction,
dans lequel une déviation du courant de gaz (40) venant frapper l'intérieur du champ de construction (10) a lieu dans une direction de circulation sensiblement parallèle en direction du bord (BR) du champ de construction dans un quart inférieur, de préférence un sixième inférieur, de manière particulièrement préférée un huitième inférieur d'une deuxième hauteur de chambre de traitement,
dans lequel la deuxième hauteur de chambre de traitement est un écart entre le champ de construction et le dispositif d'amenée de gaz (43) dans une direction perpendiculaire au champ de construction.

12. Procédé selon l'une quelconque des revendications précédentes,
dans lequel la consolidation sélective est effectuée au moyen d'un dispositif de consolidation (30) qui comprend au moins deux unités de consolidation (30a, 30b),
dans lequel une zone de traitement (10a-10f) à l'intérieur du champ de construction (10) est associée à chaque unité de consolidation,
et dans lequel les zones de traitement (10a-10f) sont disposées de préférence de manière symétrique par rapport à un plan médian ou axe médian, perpendiculaire au champ de construction (10), qui passe à travers un centre (Z0) du champ de construction.

13. Procédé selon l'une quelconque des revendications précédentes,
dans lequel le dispositif d'amenée de gaz (43) comprend au moins un dispositif de fixation (56) pour la fixation détachable d'au moins une buse (43) pour la formation du courant de gaz (40) et la au moins une buse (43) est sélectionnée à l'avance parmi une plus grande quantité de buses pouvant être fixées au moyen du dispositif de fixation (56) et est fixée au moyen du dispositif de fixation,
dans lequel une direction d'écoulement et/ou un profil d'écoulement du courant de gaz (40) dans la chambre de traitement (3) est modifié(e) par la sélection de la au moins une buse (43).

14. Unité de commande (39) pour un dispositif (1) de fabrication additive d'un objet tridimensionnel (2), dans laquelle l'unité de commande est réalisée pour générer des instructions de commande pour la mise en œuvre de préférence automatisée d'un procédé selon l'une quelconque des revendications 1 à 13.

15. Dispositif (1) de fabrication additive d'un objet tridimensionnel (2), qui est réalisé et/ou commandé pour une mise en œuvre de préférence automatisée d'un procédé selon l'une quelconque des revendications 1 à 13,
dans lequel le dispositif (1) comprend :
une chambre de traitement (3) pour la fabrication de l'objet (2) par application couche par couche et consolidation sélective d'un matériau de construction (13) à l'intérieur d'un champ de construction (10) disposé dans la chambre de traitement,
un dispositif d'amenée de gaz (43) pour l'amenée d'un gaz de traitement à la chambre de traitement pendant la fabrication de l'objet et
une sortie (42a, 42b) pour l'évacuation du gaz de traitement de la chambre de traitement,
dans lequel le dispositif d'amenée de gaz (43) est réalisé et/ou disposé par rapport au champ de construction (10) et/ou commandé de sorte qu'un courant de gaz (40), circulant à travers la chambre de traitement, du gaz de traitement est formé de telle sorte qu'au moins une surface d'impact (A3) ovale sensiblement allongée du courant de gaz (40) est produite à l'intérieur du champ de construction (A3),
**caractérisé en ce que**
le courant de gaz (40) est formé au moyen d'une entrée (43) du dispositif d'amenée de gaz (43), qui comprend côté chambre de traitement une surface d'ouverture (60) ovale allongée.
